# EUROPÄISCHE PATENTSCHRIFT

(11) **EP 4 097 005 B1**
(45) Veröffentlichungstag und Bekanntmachung des Hinweises auf die Patenterteilung: **20.08.2025**
(21) Anmeldenummer: 21702411.6
(22) Anmeldetag: 25.01.2021
(51) Int. Cl.: B64C 31/036, B64D 17/02

(54) **ELEKTRISCHE AUFSTIEGSHILFE**
ELECTRICAL LIFT AID
DISPOSITIF ÉLECTRIQUE D'AIDE À LA MONTÉE

(30) Priorität: 30.01.2020 DE 102020102333
(43) Veröffentlichungstag der Anmeldung: 07.12.2022
(73) Patentinhaber: AtlasAero GmbH, 83620 Feldkirchen-Westerham (DE)
(72) Erfinder: STÄDTLER, Jürgen, 83620 Feldkirchen-Westerham (DE); MEIßNER, Marius, 83098 Brannenburg (DE); STEINHAUSER, Andreas, 81547 München (DE)
(74) Vertreter: Beckord & Niedlich Patentanwälte PartG mbB
(86) Internationale Anmeldenummer: PCT/EP2021/051615
(87) Internationale Veröffentlichungsnummer: WO 2021/151836

(56) Entgegenhaltungen:
- EP-A1- 3 176 079
- WO-A1-2014/009931
- WO-A1-92/12050
- CZ-A3- 20 033 471
- CZ-B6- 295 432
- DE-A1- 102010 028 502
- DE-A1- 102010 028 502
- DE-U1- 202009 007 087

## Beschreibung

Die Erfindung betrifft eine elektrische Aufstiegshilfe für einen Gleitschirm mit einem Gurtzeug zum Tragen eines Piloten, einen Gleitschirm mit einer solchen Aufstiegshilfe und ein Verfahren zur Erreichung einer Gleitflugphase mit einer solchen elektrischen Aufstiegshilfe.

Elektrische Aufstiegshilfen für Gleitschirme mit einem Gurtzeug ermöglichen es einem Piloten mit einem Gleitschirm auch im ebenen Gelände zu Fuß oder per Rollstart zu starten und dann im Flug ohne dynamische Aufwinde oder Thermik längere Zeit in der Luft zu bleiben. Da bei einem Start in ebenem Gelände in Bodennähe üblicherweise keine thermischen Aufwinde vorhanden sind, die den notwendigen Auftrieb erzeugen würden, damit der Gleitschirm abheben kann, wird dazu ein Antrieb bzw. Motor benötigt. Er sorgt für einen zusätzlichen Vortrieb, also für eine ausreichende Abhebegeschwindigkeit, so dass der Pilot den tragenden Gleitschirm mittels eines geeigneten Anstellwinkels in die Luft bringen kann, ohne dass thermische Aufwinde benötigt werden. Hierzu wird üblicherweise ein speziell für den motorisierten Gleitschirmflug ausgebildetes Gurtzeug verwendet, in welches der Motor fest integriert ist. Auf diese Weise ist also der Motor mit dem Gurtzeug und damit auch mit dem Piloten verbunden.

Damit das u. a. durch den Motor erzeugte, zusätzliche Gewicht möglichst geringgehalten wird, wird üblicherweise ein kleiner bzw. leichter Motor verwendet, der mit seinem Rotor allerdings auch nur einen geringen Vortrieb in einer durch seine Anordnung bestimmten Wirkungsrichtung erzeugen kann. In der Praxis schwankt der Wirkungsgrad eines solchen Motors bzw. Rotors abhängig von der gerade vorliegenden Flugrichtung.

Da wie erwähnt bei bekannten Gurtzeugen der Motor fest integriert ist, gibt eine Sitzhaltung bzw. Sitzposition des Piloten zugleich auch die Wirkungsrichtung des Motors vor. Je aufrechter der Pilot dabei im Gurtzeug sitzt, desto höher ist dabei in der Regel der Wirkungsgrad des Motors bzw. eines Rotors des Motors, da der Rotor üblicherweise parallel zum Rücken des Piloten, insbesondere in einem entsprechenden Schutzkäfig, rotiert. Dies ist jedoch gleichbedeutend mit einem verschlechterten Gleitflugverhalten des Gleitschirms, da sich der Luftwiderstand damit wiederum erhöht.

In der DE102010028502A1 wird versucht, dieses Problem beispielsweise mittels zweier einstellbarer Positionen einer Motoraufnahme für den Motor zu lösen. Ein weiteres Beispiel findet sich im Dokument WO 2014/009931 A1 oder DE 20 2009 007087 U1.

Es ist daher eine Aufgabe der vorliegenden Erfindung, eine elektrische Aufstiegshilfe für einen Gleitschirm anzugeben, die unter Verwendung eines beliebigen, bestimmungsgemäßen Gurtzeugs, insbesondere aus ebenem Gelände startend, motorlos und motorbetrieben in einer effektiven aber bequemen Sitzposition ohne dauerhafte Gewichtsbelastung auf dem Piloten geflogen werden kann.

Diese Aufgabe wird durch eine Aufstiegshilfe nach Patentanspruch 1 und ein Verfahren zum Erreichen einer Gleitflugphase mit einer elektrischen Aufstiegshilfe nach Patentanspruch 14 gelöst.

Die eingangs genannte Aufstiegshilfe für einen Gleitschirm mit einem Gurtzeug zum Tragen eines Piloten, umfasst einen Schubmotor mit einem Rotor und ein Abstandselement zur Beabstandung des Schubmotors in Flugrichtung hinter dem Piloten.

Mit dem Schubmotor ist ohne Beschränkung der Allgemeinheit ein Motor gemeint, der elektrisch betrieben wird, also z. B. mittels eines geeigneten Energiespeichers - wie einer Batterie oder eines Akkumulators (Akku) oder dergleichen - mit Energie versorgt werden kann. Rotoren bzw. Propeller sind Elemente einer Strömungsmaschine, die mechanische Arbeit aufnehmen und diese in Form von Strömungsenergie an das sie umgebende Medium, hier Luft, abgeben. Der erwähnte Rotor bzw. Propeller kann daher auch als Luftschraube mit einem Rotorblatt mit entsprechendem Gegengewicht oder zwei Rotorblättern gesehen werden, wobei das bzw. die Rotorblätter über eine Antriebswelle mit dem Schubmotor verbunden sind. Im Betrieb sorgt der Schubmotor über die Antriebswelle für eine entsprechende mechanische Rotation bzw. Drehung der Rotorblätter des Rotors, so dass ein gewünschter Vortrieb, idealerweise exakt in Flugrichtung, erzeugt wird. Unter der Flugrichtung ist grundsätzlich eine Fortbewegungsrichtung der Aufstiegshilfe, insbesondere des Gleitschirms, zu verstehen. Abhängig von der jeweiligen Phase, in der sich die Aufstiegshilfe gerade befindet, kann es sich dabei auch um die Laufrichtung handeln, in die sich der Pilot beispielsweise während des Starts in einer Anlaufphase mit der Aufstiegshilfe für einen Gleitschirm fortbewegt. Die Flugrichtung wird dabei in der Regel durch den Piloten bestimmt, kann aber auch anderweitig vorgegeben sein, z. B. durch äußere Einflüsse. Bei einem horizontalen Flug (in gleichbleibender Höhe) über ebenem bzw. flachem Gelände verläuft die Flugrichtung parallel zur Bodenachse (Oberfläche des Bodens bzw. Geländes). Da sich der Schubmotor in Flugrichtung hinter dem Piloten befindet, "schiebt" er im bestimmungsgemäßen Einsatz den im Gurtzeug befindlichen Piloten vor sich her.

Ein aus Sicherheitsgründen sinnvoller Sicherheitsabstand des rotierenden Rotors in Flugrichtung vom Piloten wird hierbei mittels des Abstandselements erreicht, dass dadurch die Funktion eines den Piloten sichernden Auslegers übernimmt. Dadurch ist also insbesondere kein Schutzkäfig für den rotierenden Rotor notwendig. Das Abstandselement ist allerdings nicht nur dazu ausgebildet, den Schubmotor vom Piloten zu beabstanden, sondern ist entsprechend stabil gestaltet, um u. a. den Schubmotor inklusive Rotor tragen und ggf. möglicherweise beim Flug auftretende Scherkräfte o. Ä. aushalten zu können. Das Abstandselement, bei dem es sich z. B. um ein längliches, Konstruktionselement bzw. Trägerelement handelt, ist vorzugsweise zumindest so lang, dass zwischen Pilot und Schubmotor mindestens eine Rotorblattlänge (hier als Sicherheitsabstand definiert) passt, so dass der Pilot in keinem Fall mit seinen Armen den rotierenden Rotor erreichen könnte. Er kann dabei aber möglichst leicht ausgebildet sein, z. B. aus Carbon, Aluminium, Holz oder dergleichen.

Erfindungsgemäß ist das Abstandselement hinter dem Rücken des Piloten angeordnet und erstreckt sich mit seiner Längsrichtung im Wesentlichen in Flugrichtung, um insgesamt einen möglichst geringen Luftwiderstand zu erzeugen. Somit besitzt es in Längsrichtung ein bestimmungsgemäßes pilotennahes und ein pilotenfernes Ende, auf welche später noch Bezug genommen wird.

Weiter umfasst die Aufstiegshilfe erfindungsgemäß eine Anzahl von Schubstangen. Diese verknüpfen den Schubmotor - u. a. über das dazwischenliegende Abstandselement - mit dem Gleitschirm und übertragen damit das Gewicht und den Schub des Schubmotors im Flug auf den Gleitschirm, ohne den Piloten gewichtstechnisch zu belasten. Zudem bieten sie Ankopplungsmöglichkeiten für ein beliebiges Gurtzeug zum Tragen des Piloten. Außerdem stellen sie eine besonders vorteilhafte Verbindung zwischen den Komponenten der Aufstiegshilfe hinter dem Piloten und den in Flugrichtung vor dem Piloten befindlichen Komponenten her, die ermöglicht, dass der Pilot mit seinen Armen nahezu uneingeschränkt steuern kann.

Beispielsweise kann es sich bei den Schubstangen um robuste, im Wesentlichen starre Stangen, Gestänge oder dergleichen handeln, die seitlich am Piloten vorbeigeführt verlaufen und damit für eine den Piloten im Flug entlastende Kraftübertragung zwischen Aufstiegshilfe und Gleitschirm sorgen. So lassen sich auch besonders lange Flüge bzw. Flugzeiten problemlos aushalten bzw. realisieren.

Des Weiteren umfasst die Aufstiegshilfe erfindungsgemäß zumindest zwei Drehgelenke, welche derart ausgebildet und in Flugrichtung hinter dem Piloten, vorzugsweise mit jeweils einem Drehlagerteil am Abstandselement, angeordnet sind, dass eine Art "drehbares Doppelgelenk", also zwei zueinander drehbare bzw. schwenkbare Gelenke entstehen. Im einfachsten Fall können die Drehgelenke parallele, senkrecht zur Flugrichtung verlaufende Drehachsen aufweisen, die eine Rotation mit sich, gegen sich oder eine gegenläufige Rotation erlauben.

Hierzu sind die oben erwähnten Schubstangen mittels eines ersten Drehgelenks schwenkbar an einem ersten pilotennahen (festen) Ende (d. h. zumindest im Bereich dieses Endes) des Abstandselements gelagert.

Am anderen, pilotenfernen Ende des Abstandselements, d. h. am freien in Flugrichtung hinteren Ende, ist der Schubmotor wiederum mittels des zweiten Drehgelenks schwenkbar gegen das Abstandselement gelagert. Damit entsteht in Summe eine mehrgliedrige Aufstiegshilfe, deren einzelne Abschnitte bzw. Glieder gegeneinander beweglich gelagert sind.

Durch die zuvor beschriebene erfindungsgemäße Konstruktion der Erfindung wird zudem erreicht, dass ein Nutzer, also der Pilot, die elektrische Aufstiegshilfe unabhängig von der Flugphase bzw. Phase (Anlaufphase, Antriebsphase, Gleitflugphase oder optional Landephase; Erläuterung folgt weiter unten) bequem steuern bzw. fliegen kann. Mit der erfindungsgemäßen Aufstiegshilfe für einen Gleitschirm kann der Pilot also während des Flugs, vorzugsweise jederzeit, eine optimale Sitzposition bzw. Sitzhaltung einnehmen, die auch unabhängig von der Flugrichtung längere Flugzeiten angenehm möglich macht. Zumindest während des Starts bzw. der Anlaufphase nimmt der Pilot allerdings eine nahezu aufrechte, leicht nach vorne in Anlaufrichtung geneigte, Position ein, in der er sich bestmöglich (vorwärts oder rückwärts) in die Anlaufrichtung bewegen kann und in der der Motor bzw. der Rotor zugleich mit seiner Wirkungsrichtung optimal in Anlaufrichtung ausgerichtet ist bzw. zeigt.

Ein erfindungsgemäßes Verfahren zum Erreichen einer Gleitflugphase mit einer elektrischen Aufstiegshilfe für einen Gleitschirm mit einem Gurtzeug zum Tragen eines Piloten, mit einem Schubmotor aufweisend einen Rotor, einem Abstandselement zur Beabstandung des Schubmotors in einer Flugrichtung hinter dem Piloten, einer Anzahl von Schubstangen und zumindest zwei Drehgelenken, umfasst zumindest die folgenden Schritte:
In einer Anlaufphase, vorzugsweise bis zum Erreichen einer Abhebegeschwindigkeit, wird ein Gewicht der bestimmungsgemäß angeordneten Aufstiegshilfe durch den Piloten selbst getragen. Ab dem Zeitpunkt des Erreichens der Abhebegeschwindigkeit weist der Gleitschirm dann selbst den nötigen Auftrieb auf, um die Aufstiegshilfe und den Piloten vollständig tragen zu können und damit vom Boden abzuheben. Im Gleitschirmbereich wird hierzu eine im Ausgangszustand instabile Schirmkappe als Auftrieb erzeugende "Tragfläche" genutzt, die aus mehreren Luftkammern besteht. Diese werden durch den anströmenden Luftstrom bei zunehmender Geschwindigkeit mit Luft gefüllt und bilden somit stabile Tragflächen aus. Ab der sogenannten Abhebegeschwindigkeit reicht dann der durch die Tragflächen erzeugte Auftrieb aus, die Aufstiegshilfe (unter weiterer Verwendung des Vortriebs des Schubmotors) in die Luft zu bringen.

Vorzugsweise können zum Tragen der Aufstiegshilfe Schultergurte, insbesondere Rettungsverbindungsleinen (zum Rettungsgerät bzw. Notschirm), des Gurtzeugs des Piloten verwendet werden, an der die Aufstiegshilfe mit Kopplungsmitteln lösbar befestigt ist, so dass der Pilot im Normalzustand (Anlaufphase) zwar das Gewicht der Aufstiegshilfe über seine Schultern trägt, aber zumindest Teile der Aufstiegshilfe im Notfall über die Rettungsverbindungsleinen (insbesondere bei einem tragenden Gleitschirm) von sich lösen kann, d. h. dass er sich im Notfall entsprechend vom Rest der Aufstiegshilfe (insbesondere Schubmotor, Rotor und Abstandselement) entledigen bzw. lösen kann.

In einer Antriebsphase, die ggf. während des Anlaufens des Piloten in der Anlaufphase beginnen kann, wird unter Verwendung des senkrecht zur Flugrichtung rotierenden Rotors ein Vortrieb in Flugrichtung erzielt. Dabei wird nicht nur der Pilot mit der Aufstiegshilfe durch den Gleitschirm getragen, sondern es werden auch die Schultergurte des Piloten dadurch entlastet, dass die Last, d. h. das Gewicht der Aufstiegshilfe, unter Bildung eines Kräftegleichgewichts zwischen dem am Gurtzeug hängenden Piloten und dem Schubmotor (inklusive Abstandselement) auf den Schubstangen lastet.

In einer Gleitflugphase wird mittels einer Schwenkmechanik am zweiten Drehgelenk (Erläuterung weiter unten) eine Längsrichtung der Rotorblätter des Rotors im Wesentlichen parallel zur Flugrichtung ausgerichtet bzw. eingeschwenkt. Dabei steht zumindest der Rotor des Schubmotors still. Dies sorgt dafür, dass ein bestmögliches Gleitflugverhalten erzielt werden kann.

Im beschriebenen Verfahren zur Steuerung der Aufstiegshilfe kann zusätzlich eine Anzahl weiterer Schritte vorgesehen sein. Optional kann der Rotor in der Gleitflugphase mittels einer aerodynamischen Verkleidung zumindest teilweise, vorzugsweise zumindest entlang des Abstandselements, verdeckt werden.

Optional können die Rotorblätter in einer Landephase mit der Längsrichtung quer zu einer Landeanflugrichtung, insbesondere horizontal, ausgerichtet werden. Mit der Landephase ist eine Flugphase bzw. Phase gemeint, die sich gegebenenfalls an die Gleitflugphase anschließt, aber in jedem Fall am Ende des Gleitschirmflugs, d. h. zumindest nach einer erfolgreichen Anlaufphase mit anschließender Antriebsphase, steht. Eine Landung bzw. die Landephase wird selbstverständlich unabhängig von der Gleitflugphase erreicht.

Durch die erfindungsgemäße Verwendung einer erfindungsgemäßen elektrischen Aufstiegshilfe zum Erreichen einer Gleitflugphase mit dem Gleitschirm, insbesondere startend von im Wesentlichen ebenem Gelände, d. h. aus einer Ebene, kann unabhängig von dynamischen oder thermischen Aufwinden gestartet, sowie auch anschließend geflogen werden.

Ein erfindungsgemäßer Gleitschirm umfasst zumindest eine erfindungsgemäße elektrisch betriebene Aufstiegshilfe. Dabei kann die Aufstiegshilfe zumindest einen elektrischen Antrieb bzw. Elektro-Motor aufweisen. Ein solcher Motor - z. B. ein elektrischer Rucksackmotor (mit oder) ohne Schutzkäfig, insbesondere ein bürstenloser Drehstromsynchron-Elektromotor - kann beispielsweise mit zwei Rotorblättern des Rotors verbunden sein. Alternativ kann er auch mit einem Rotor mit nur einem Rotorblatt mit einem entsprechenden Gegengewicht auf der anderen Seite der Drehachse verbunden sein.

Durch die Ausbildung der erfindungsgemäßen Aufstiegshilfe mit dem oben beschriebenen Drehgelenk (zwischen den Schubstangen und dem Abstandselement für den Schubmotor) wird erreicht, dass der Pilot sowohl in der Anlaufphase als auch in der Antriebsphase in einer optimalen Start- bzw. Flugposition angeordnet ist.

Durch die Kombination der beiden beschriebenen Drehgelenke nach Art des Doppelgelenks, d. h. zwei in sich bzw. gegeneinander drehbare bzw. schwenkbare Gelenke, kann zudem das Flugverhalten einer solchen Aufstiegshilfe soweit verbessert werden, dass sich die Aufstiegshilfe sowohl für einen motorbetriebenen Flug als auch einen motorlosen Thermikflug bzw. Gleitflug eignet.

Obwohl es mit der erfindungsgemäßen Aufstiegshilfe - wie bereits eingangs erwähnt wurde - problemlos möglich ist ohne dynamische Aufwinde oder Thermik längere Zeit in der Luft zu bleiben (lediglich abhängig von der Akkulaufzeit für den Schubmotor), bezweckt die vorliegende Erfindung dennoch möglichst bald eine Gleitflugphase zu erreichen, in der dann, wenn thermische Aufwinde vorhanden sind bzw. gefunden wurden, bequem, antriebslos und damit energiesparend ohne größere Gleitflug-Einschränkungen mit eingeschwenktem Schubmotor mit Rotor nach Art eines motorlosen Thermikflugs bzw. Gleitflugs geflogen bzw. geglitten werden kann.

Weitere, besonders vorteilhafte Ausgestaltungen und Weiterbildungen der Erfindung ergeben sich aus den abhängigen Ansprüchen sowie der Beschreibung, wobei die unabhängigen Ansprüche einer Anspruchskategorie auch analog zu den abhängigen Ansprüchen und der Beschreibung einer anderen Anspruchskategorie weitergebildet sein können und insbesondere auch einzelne Merkmale verschiedener Ausführungsbeispiele zu neuen Ausführungsbeispielen kombiniert werden können.

Um - wie oben erwähnt - u. a. von ebenem Gelände aus starten zu können, kann die elektrische Aufstiegshilfe neben dem elektrischen Antrieb bzw. Motor mit einem Rotor vorzugsweise auch Leistungselektronik zur Erzeugung des elektrischen Drehfeldes, Lithium-Ionen-Akkus, einen Mikroprozessor und ein Bedienmodul zur Leistungs- bzw. Schubregelung des Motors aufweisen.

Für die weitere Ausgestaltung der Schubstangen gibt es verschiedene Möglichkeiten.

Beispielsweise handelt es sich bei den oben erwähnten Schubstangen bevorzugt um zwei baugleiche, einzeln gebogene Stangen oder dergleichen. Sie können entsprechend parallel zueinander in einer prinzipiell vorgesehenen Flugrichtung angeordnet werden, so dass sie im Betrieb rechts und links am Piloten vorbeilaufen und hinter dem Piloten in etwa bis über die Schulterhöhe des Piloten reichen.

Hinter dem Piloten wiederum - wo die Schubstangen wie beschrieben bis auf Schulterhöhe reichen - können diese zusammen einen ersten Teil des ersten Drehgelenks bilden, der drehbar bzw. schwenkbar in einem zweiten Teil des ersten Drehgelenks am Abstandselement gelagert ist. Der erste Teil des ersten Drehgelenks kann z. B. in einem besonders einfachen Fall eine runde Metallstange sein, die im zweiten Teil des ersten Drehgelenks drehbar gelagert ist. Der zweite Teil kann dann entsprechend zumindest eine Öse bzw. Führung umfassen. Vorzugsweise kann das erste Drehgelenk aber im Wesentlichen umgekehrt ausgebildet sein, d. h. der erste Teil bzw. die jeweilige Schubstange umfasst z. B. die genannte Öse und der zweite Teil weist die entsprechende Stange auf, so dass die Stange in den Ösen drehbar gelagert ist.

Ansonsten können die Schubstangen im Wesentlichen unabhängig voneinander beweglich gelagert sein, d. h. vor dem Piloten z. B. nur lösbar locker miteinander verbunden sein.

Besonders bevorzugt können die Schubstangen jeweils gekrümmt geformt bzw. ausgebildet sein.

Vorzugsweise können sie derart "bogensichelförmig" geformt und angeordnet sein, dass sie im bestimmungsgemäßen Betrieb bezüglich ihrer Höhenlage bzw. des Abstands zum tragenden Gleitschirm nacheinander entlang ihrer Längserstreckung (z. B. im Wesentlichen in Flugrichtung) ein "globales" Maximum (höchster Punkt bzw. Maximum befindet sich in etwa auf Schulterhöhe eines im Gurtzeug bestimmungsgemäß angeordneten Piloten), dann im weiteren Verlauf ein "lokales" Minimum (auf Höhe der Hüften unterhalb der Arme des Piloten), und im vorderen Bereich weiter ein "lokales" Maximum (in etwa Bauchnabel bis Brusthöhe) und dann ggf. im weiteren Verlauf einen in Richtung der Füße des Piloten, d. h. schräg im 45°-Winkel nach unten sowie vorne, verlaufenden Endabschnitt aufweisen.

Für die Steuerung des Gleitschirms beim Start und gegebenenfalls auch während des Flugs können so beidhändige Steuerimpulse des Piloten genutzt werden, da beide Hände des Piloten durch die Form der Schubstangen in ihrem Bewegungsradius frei bewegbar sind, also relativ uneingeschränkt agieren können. Insbesondere sorgen hierfür die tiefen "Armausschnitte", die durch das lokale Minimum zwischen dem höchsten Punkt hinter dem Piloten und dem lokalen Maximum vor dem Piloten realisiert sind.

Für verschieden gebaute bzw. unterschiedlich große Piloten können die Schubstangen zudem entsprechend austariert mit den übrigen Komponenten bzw. dem Piloten koppelbar sein. Beispielsweise kann die relative Position, insbesondere eine Aufhängehöhe, der Schubstangen relativ zum Piloten variiert werden. Hierzu können die Schubstangen entlang ihrer Längserstreckung vorzugsweise mehrere wählbare Aufhängepunkte, d. h. Kopplungsmöglichkeiten zum Koppeln des Gleitschirms und/oder des Gurtzeugs an den Schubstangen, wie dies später noch erläutert wird, aufweisen, die es erlauben, die Schubstangen in unterschiedlichen Positionen, insbesondere Aufhängehöhen, relativ zum Piloten anzuordnen. Die Höhe des Aufhängepunkts (relativ zum Piloten) bestimmt nämlich maßgeblich die Übertragung von möglichen Schirmturbulenzen auf den Körper des Piloten.

Vorzugsweise kann die elektrische Aufstiegshilfe, also insbesondere am Abstandselement, mindestens ein Kopplungsmittel zur Ankopplung zumindest eines Teils eines standardmäßigen Gurtzeugs aufweisen. Mit dem Kopplungsmittel kann der Pilot in der Anlaufphase im bestimmungsgemäßen Gebrauch das Gewicht der Aufstiegshilfe, also unter anderem das Gewicht des Abstandselements sowie des Schubmotors, über Schultergurte des Gurtzeugs selber tragen, so dass damit die Schubstangen entsprechend entlastet sind.

Die Schubstangen können allerdings nicht nur im Wesentlichen direkt vor dem Abheben beim Startvorgang in der Anlaufphase kräftemäßig entlastet sein, sondern auch vorzugsweise wieder unmittelbar nach dem Aufsetzen bei der Ladung, da ja in diesen beiden Flugphasen die Trageflächen des Gleitschirms noch keinen bzw. nicht mehr einen "tragenden" Auftrieb erzeugen. Anders ausgedrückt können sie also im Wesentlichen immer dann entlastet sein, wenn der Pilot der Aufstiegshilfe festen Bodenkontakt hat, also selbst das Gewicht der Aufstiegshilfe trägt. Denn dann ist die Aufstiegshilfe noch nicht bzw. nicht mehr im Flug.

Besonders bevorzugt kann das Kopplungsmittel mit sogenannten Rettungsverbindungsleinen (zu einem Rettungsgerät bzw. Notschirm) des Gurtzeugs gekoppelt sein. Diese befinden sich üblicherweise an jedem handelsüblichen Gurtzeug oder können daran angebracht werden, um den Piloten in einem Notfall zu retten.

Auch für die weitere Ausgestaltung der Aufstiegshilfe, insbesondere für eine vorteilhafte Kräfteverteilung, gibt es unterschiedliche Möglichkeiten.

Bevorzugt kann die Aufstiegshilfe derart ausgebildet sein, dass der Pilot - wenn er mitsamt der Aufstiegshilfe vom Gleitschirm getragen wird - in einer Antriebsphase, vorzugsweise trimmbar, in einem Gurtzeugaufhängepunkt der Schubstangen eingehängt ist, so dass ein Drehmoment, welches durch das Gewicht der Aufstiegshilfe am ersten Drehgelenk angreift, ausgeglichen ist. Der Gurtzeugaufhängepunkt dient dabei zum Aufhängen des Gurtzeugs zum Tragen des Piloten. Der Begriff "Punkt" ist dabei im Sinne einer Position, insbesondere einer Position der Gurtzeugaufhängung, zu verstehen. Dieser und auch weitere erwähnte Punkte können beispielsweise durch einfache Löcher oder Ösen realisiert sein, die eine Komponente mit einer anderen Komponente, z. B. direkt mit Seilschlaufen oder mittels Karabinern oder dergleichen, verbinden. Mit "trimmbar" ist hier zudem gemeint, dass die Aufstiegshilfe an Gewicht, Größe, Armlänge o. Ä. des Piloten anpassbar ist. Beispielsweise kann der Gleitschirmeinhängepunkt über zwei in der Länge einstellbare Leinen bzw. Schlaufen - nach Art einer "Zweipunkt"-Gleitschirmaufhängung - zu den Schubstangen austariert werden, d. h. er kann so positioniert werden, dass sich das Gewicht der Aufstiegshilfe gegen das Gewicht des Piloten ausgleicht. Hierzu können beispielsweise die einstellbaren Leinen entsprechende "Gewichts"-Markierungen aufweisen, so dass die Aufstiegshilfe vorteilhaft ohne komplizierte, startvorbereitende Gleichgewichtstests vor dem jeweiligen Flug schnell und einfach auf das Gewicht des Piloten abgestimmt eingestellt werden kann.

Vorzugsweise lässt sich die Aufstiegshilfe insgesamt derart trimmen bzw. austarieren, wobei das Gurtzeug des Piloten und der Gleitschirm entsprechend relativ zum Schubmotor inklusive Abstandselement anzuordnen sind, dass das Flugverhalten der Aufstiegshilfe im Gleitflug (d. h. mit ausgeschaltetem, parallel zur Flugrichtung eingeschwenktem Rotor) möglichst dem Flugverhalten eines motorlosen Gleitschirms entspricht, um die bewährten positiven Eigenschaften des motorlosen Gleitflugs zu erreichen. Dadurch erhält der Pilot die Möglichkeit, während des Flugs eine bequeme Sitzposition bzw. Sitzhaltung einzunehmen, in der er im Wesentlichen frei zum Steuern des Gleitschirms durch Gewichtsverlagerung am Gurtzeug "baumelt" bzw. hängt.

Besonders bevorzugt ist die Aufstiegshilfe so ausgebildet ist, dass in einer Gleitflugphase zumindest der Rotor des schwenkbaren Schubmotors stillsteht und eine Längsrichtung der zwei Rotorblätter des Rotors im Wesentlichen parallel zur Flugrichtung ausgerichtet ist.

So lässt sich der Schubmotor beispielsweise für eine Gleitflugphase aus einer aktiven Position mit rotierendem Rotor in eine passive Position mit stillstehendem Rotor bewegen bzw. schwenken. In der passiven Position kann dann auch der Pilot u. a. mittels des zusätzlichen Drehgelenks eine entsprechend vorteilhafte, bequeme sowie aerodynamisch günstige, Position einnehmen, die die Gleitflugeigenschaften der elektrischen Aufstiegshilfe für einen Gleitschirm derart optimiert. Dadurch werden längere Flüge bzw. Flugzeiten möglich bzw. zumindest begünstigt.

Eine solche Aufstiegshilfe ist auch unabhängig von der erfindungsgemäßen Idee, auch ein pilotennahes Drehgelenk auszubilden, vorteilhaft. Sie kann daher für jede Aufstiegshilfe für einen Gleitschirm mit einem Gurtzeug zum Tragen eines Piloten genutzt werden, die einen schwenkbaren Schubmotor mit einem Rotor, ein längliches Abstandselement zur Beabstandung des Schubmotors in Flugrichtung hinter dem Piloten und eine Anzahl von, vorzugweise am Piloten in Flugrichtung vorbeilaufenden, Schubstangen umfasst. Sie kann also als eine eigenständige vorteilhafte Idee gesehen werden. Besondere synergetische Effekte ergeben sich jedoch bei einer Kombination der beiden Ideen.

Ebenso gibt es für die Ausgestaltung der Schubstangen bezüglich der vertikalen und horizontalen Anordnung der oben erwähnten Aufhängepunkte bzw. Schnittstellen zu den weiteren Komponenten der Aufstiegshilfe, unterschiedliche Möglichkeiten, z. B. mehrere Ösen an und/oder Löcher in den Schubstangen, wie oben bereits beschrieben.

Vorzugsweise kann die Aufstiegshilfe so ausgebildet sein, dass das erste Drehgelenk bei einem tragenden Gleitschirm im bestimmungsgemäßen Gebrauch näher am Gleitschirm angeordnet ist, als der Gurtzeugaufhängepunkt der Schubstangen. "Bei einem tragenden Gleitschirm" ist folglich entsprechend der zuvor gegebenen Definition derart zu verstehen, dass der Gleitschirm das Gewicht der Aufstiegshilfe trägt, d. h. beispielsweise nach dem Abheben beim Start, während des eigentlichen Flugs oder noch vor dem Aufsetzen bei der Landung. Die betreffende Richtung, auf die sich die relative Abstandsangabe bezieht, ist hierbei im Wesentlichen die vertikale Richtung bzw. Anordnung senkrecht zur Flugrichtung, d. h. bei einem normalen Flugmanöver also die Vertikalrichtung bzw. Richtung der Erdbeschleunigung.

Alternativ kann die Aufstiegshilfe vorzugsweise so ausgebildet sein, dass das erste Drehgelenk bei einem tragenden Gleitschirm im bestimmungsgemäßen Gebrauch näher am Gleitschirm angeordnet ist als ein Gleitschirmeinhängepunkt zum Einhängen bzw. Befestigen des Gleitschirms an der Aufstiegshilfe.

Die Aufstiegshilfe ist aber nicht auf die zuvor genannten Varianten beschränkt. Besonders bevorzugt kann die Aufstiegshilfe so ausgebildet sein, dass das erste Drehgelenk bei einem tragenden Gleitschirm im bestimmungsgemäßen Gebrauch näher am Gleitschirm angeordnet ist, als der Gurtzeugaufhängepunkt und der Gleitschirmeinhängepunkt der Schubstangen. Diese besonders niedrige Sitzposition des Piloten sorgt für zusätzliche passive Sicherheit, da er damit durch standardmäßige, auf der Unterseite des Gurtzeugs in eine Sitzschale integrierte Protektoren geschützt ist, die den Aufprall im Falle einer harten Landung oder eines Sturzes während der Anlaufphase dämpfen. Zugleich verbessern sich dadurch auch die aerodynamischen Eigenschaften der Aufstiegshilfe, da der Pilot damit weniger Luftwiderstand bietet.

Vorzugsweise kann bei einem tragenden Gleitschirm zumindest ein Gleitschirmeinhängepunkt in Flugrichtung hinter einem Gurtzeugaufhängepunkt, insbesondere aber vor dem Piloten, angeordnet sein. Mit einer derartigen Anordnung kann dafür gesorgt werden, dass der Gleitschirmeinhängepunkt als zentraler Drehpunkt zwischen Gurtzeugaufhängepunkt und erstem Drehgelenk der Schubstangen fungiert. Bei entsprechender Anordnung des Gurtzeugaufhängepunkts (zum Aufhängen des Gurtzeugs zum Tragen des Gewichts des Piloten) entlang der Schubstangen kann relativ zu diesem Drehpunkt ein angreifendes Drehmoment der Komponenten (Abstandselement, Schubmotor, Rotor, etc.), die in Flugrichtung hinter dem ersten Drehgelenk (d. h. in Flugrichtung hinter dem Drehpunkt) liegen, ausgeglichen werden. Genauer gesagt kann - da ja das Gewicht des Piloten und der Aufstiegshilfe bekannt sind - der Gleitschirmeinhängepunkt, in dem sogenannte Stammleinen des Gleitschirms direkt eingehängt sind, mittels zweier in der Länge einstellbarer Leinen so zur Ausbildung eines Kräftegleichgewichts (Drehmomenten-Gleichgewicht) in der Aufstiegshilfe getrimmt werden, dass das Gewicht des Piloten, das am Gurtzeugaufhängepunkt der Schubstangen hängt, das Gewicht der Aufstiegshilfe (Abstandselement, Schubmotor, Rotor, etc.) abhängig von der Trimmung der besagten Leinen ausgleicht. Hierzu könnten die Leinen vorzugsweise mit einem flexiblen Material, z. B. zusätzlich mit Elasthan-Fasern oder dergleichen, ausgebildet sein, um Schirmturbulenzen abzufedern.

Durch eine solche Änderung des Abstands zwischen dem Gurtzeugaufhängepunkt und dem Drehpunkt (in Flugrichtung) lässt sich also die Aufstiegshilfe für unterschiedliche Gewichte eines Piloten nahezu beliebig relativ zu dem Gewicht der Aufstiegshilfe trimmen. Insbesondere kann dabei darauf geachtet werden, dass ein kritisches Kippmoment um den Drehpunkt für beliebige Flugmanöver bestmöglich ausgeschlossen werden kann.

Beispielsweise kann der Gleitschirmeinhängepunkt über eine starre Karabinerverbindung mit einem Punkt bzw. einer Öse der jeweiligen Schubstange verbunden werden. Vorzugsweise kann der Gleitschirmeinhängepunkt aber über eine flexible Textilverbindung bzw. die beschriebenen Leinen in zwei, jeweils vor und hinter dem Gurtzeugaufhängepunkt befindlichen Punkten bzw. Ösen an den Schubstangen mit den Schubstangen verbunden sein. Mit den Leinen können auch Lastaufnahmemittel gemeint sein, die der Verteilung und Stabilisierung von Last dienen, wobei die Last hier dem Gesamtgewicht (Aufstiegshilfe und Pilot) entspricht, welches der Gleitschirm im Flug mittels Auftrieb tragen muss.

Bevorzugt kann ein Gurtzeugaufhängepunkt mindestens so nah, vorzugsweise näher, am Gleitschirm angeordnet sein wie (als) ein Gleitschirmeinhängepunkt. Gemeint ist hier, dass der Gurtzeugaufhängepunkt bei bestimmungsgemäßen Gebrauch zumindest bei einem tragenden Gleitschirm immer näher (d. h. in einer Richtung der Erdbeschleunigung) am Gleitschirm angeordnet ist, als der Gleitschirmeinhängepunkt. Mit dieser "erhöhten" Anordnung wird für eine zusätzliche Stabilisierung der Aufstiegshilfe gesorgt.

Es kann dabei möglicherweise auch nur ein relativ geringer vertikaler Abstand zwischen Gleitschirmeinhängepunkt und Gurtzeugaufhängepunkt vorgesehen sein, um den Abstand der Steuerleinen für den Piloten nicht zu verfälschen. Ein relativ großer bzw. vergrößerter Abstand verlängert nämlich den Bremsweg (von sogenannten Bremsleinen bzw. Steuerleinen, die jedes gewöhnliche Gurtzeug für Gleitschirme aufweist) bei einer gewohnten Armstellung und erhöht die Wahrscheinlichkeit für einen Strömungsabriss einer Schirmkappe des Gleitschirms.

Zudem kann so besonders einfach (wie oben erwähnt mittels des relativ zum Gleitschirmeinhängepunkt näher am Gleitschirm befindlichen Gurtzeugaufhängepunkts) ein beliebiges Gurtzeug verwendet werden, welches lediglich mit seinen dafür vorgesehenen Karabinern in den oben erwähnten, zugehörigen Ösen der Schubstangen eingehakt bzw. eingehängt wird. So kann sich dann im Flug von selbst eine vorzugsweise um 25° nach hinten geneigte, angenehme Pilotenposition bzw. Sitzposition (z. B. bei einem nahezu horizontalen Flug) einstellen, in welcher der Pilot bequem längere Zeit fliegen kann.

Vorzugsweise kann das Abstandselement im Wesentlichen freischwingend, vorzugsweise bestimmungsgemäß gedämpft freischwingend, im ersten Drehgelenk (als passiver Aufhängepunkt) am hinteren Ende der Schubstangen gelagert bzw. aufgehängt sein. Dabei kann das erste Drehgelenk vorzugsweise zwei unabhängige, "passive" Drehlager am jeweiligen, hinteren Ende der jeweiligen Schubstange umfassen, die das Abstandselement gemeinsam freischwingend lagern. Unter "gedämpft freischwingend" ist hier zu verstehen, dass die Amplitude einer Schwingung im ersten Drehgelenk mit der Zeit abnimmt, d. h. insbesondere zusätzlich zur reinen Luftreibung (i. d. R. vernachlässigbar) gedämpft wird. Gemäß den Begrifflichkeiten aus der Schwingungslehre ist hier konkret eine schwach gedämpfte freie Schwingung gemeint. Um diese Dämpfung zu erreichen, könnte intern und/oder extern beispielsweise eine mechanische, hydraulische oder pneumatische Feder oder dergleichen eingesetzt werden. Eine solche externe Dämpfung kann beispielsweise ein Stoßdämpfer oder eine ausgepolsterte Rückenplatte sein. Intern könnte die Dämpfung beispielsweise mittels einer Flüssigkeit oder einem Gas im Drehgelenk realisiert sein. Bei einer alternativen Form der externen Dämpfung könnte ein Anschlag mit einem flexiblen Dämpfungsmaterial belegt sein. Hierfür bieten sich beispielsweise Bandschlingen an. Diese bilden dann einen bestimmungsgemäß gedämpften und zudem besonders flexiblen und belastungsfähigen Anschlag aus.

Die Verbindung der Schubstangen mit der Motoraufhängung bzw. dem Abstandselement kann also über zwei senkrecht zur Flugrichtung zueinander beabstandete Lager erfolgen, welche unabhängig voneinander relativ zum Abstandselement gedreht werden können. Dadurch entstehen verbesserte Flugeigenschaften für Kurvenlagen und dynamische Manöver. Die beiden Lager können dabei vorzugsweise so ausgebildet sein, dass sie auch seitliche Kräfte aufnehmen können. Hiermit werden Bewegungen um die Längsachse eliminiert.

Vorzugsweise kann das erste Drehgelenk direkt über einen Anschlag im Drehgelenk eingeschränkt sein. Besonders bevorzugt kann es indirekt durch einen vorderen, pilotennahen Anschlag, insbesondere mittels einer Rückenplatte oder ggf. einer Außenseite einer Sitzschale eines üblichen Gurtzeugs, in seinem Rotationswinkel eingeschränkt sein.

Mit einem Anschlag im ersten Drehgelenk, kann der Schub des Motors - zumindest im Falle eines bestimmten Anschlag-Winkels bzw. Anschlag-Punktes bei Erreichen dieses Anschlag-Winkels - direkt auf die Schubstangen und den Gleitschirm übertragen bzw. überführt werden.

Um den bestmöglichen Wirkungsgrad des Schubmotors zu erreichen, gibt es auch für die Ausgestaltung des zweiten, pilotenfernen Drehgelenks zwischen Abstandselement und Schubmotor weitere Möglichkeiten.

Da die Wirkungsrichtung des Schubmotors im Idealfall stets mit der gewünschten Flugrichtung übereinstimmen sollte, kann der Antrieb bzw. Schubmotor vorzugsweise eine motorisch verstellbare Schwenkmechanik am bzw. im zweiten Drehgelenk aufweisen, die dafür sorgt, dass der oben erwähnte Anstellwinkel des Schubmotors so gesteuert wird, dass die Wirkungsrichtung des Schubmotors in Flugrichtung gehalten wird. "Wirkungsrichtung des Schubmotors in Flugrichtung" heißt, dass die Rotorblätter des Rotors mit ihrer Längsrichtung (also der Rotorebene bzw. Rotationsebene) senkrecht bzw. normal zur Flugrichtung angeordnet sind, so dass ein maximaler Vortrieb bzw. Schub erzeugt werden kann. Motorisch verstellbar wiederum heißt, dass die Schwenkmechanik bevorzugt über einen Stellmotor steuerbar ist, der den Winkel des Schubmotors zum Abstandselement anpassen kann.

Dementsprechend umfasst die Schwenkmechanik bevorzugt einen Stellmotor zu ihrer Verstellung. Bei dem Stellmotor kann es sich z. B. um einen Schrittmotor handeln, besonders bevorzugt ist der Stellmotor jedoch als Spindelmotor ausgebildet, der eine Spindel bzw. Gewindespindel antreibt. Die Spindel ist dabei bevorzugt im Wesentlichen platzsparend, parallel zum und in einem lichten Bereich im Abstandselements angeordnet. Der Spindelmotor und die Spindel, insbesondere die Steigung des Gewindes der Spindel, sind so ausgelegt und ausgebildet, dass sie den zum Schwenken des Motors benötigten Trieb und die erforderliche Triebkraft bereitstellen.

Ganz besonders bevorzugt umfasst die Schwenkmechanik eine Gliederkette, die den Trieb der Spindel in eine Schwenkbewegung des Rotors überträgt. Die Gliederkette umfasst dabei eine Anzahl von, insbesondere drei, Gliederarmen, wobei benachbarte Gliederarme gelenkig miteinander verbunden sind. Die Gliederarme sind dabei bevorzugt als Flachstangen ausgebildet, die bevorzugt endseitig mit Drehlagern verbunden sind. Beispielsweise wirkt auf einen ersten Gliederarm die vom Spindelmotor erzeugte und unter Verwendung der Spindel übertragene Kraft. Die Kraft wird mittels eines zweiten Gliederarms weiter auf einen dritten Gliederarm übertragen, der starr mit dem Motor verbunden und drehbar mit dem Motor im zweiten Drehgelenk gelagert ist. Eine durch die Kraft verursachte Bewegung des dritten Gliederarms resultiert somit auch in einer Schwenkbewegung des Motors. Die Kraftübertragung mittels der Gliederkette ist dabei vorteilhaft platzsparend, sodass der Schenkmechanismus und sein Aktionsbereich im Querschnitt nicht wesentlich größer als das Abstandselement sind.

Bevorzugt wird der Winkel des Schubmotors zum Abstandselement in Abhängigkeit von dem Nickwinkel des Gleitschirms angepasst. Besonders bevorzugt kann die Schwenkmechanik dabei automatisch gesteuert sein, d. h. insbesondere eine automatische Steuerung aufweisen. Beispielsweise kann eine softwaregestützte Steuerung für eine stetige Nachjustierung des Schubvektors sorgen. Dadurch, dass also Flugrichtung und Wirkungsrichtung stetig aneinander angepasst werden, kann die Effizienz des Schubmotors maximiert werden. Damit wird zudem erreicht, dass sich der Pilot bestmöglich auf das Fliegen konzentrieren kann, ohne ggf. zusätzlich die Ausrichtung des Motors anpassen zu müssen.

Weiter lässt sich also mit einem schwächeren, aber dafür leichteren Schubmotor - dessen Wirkungsrichtung wie erwähnt stets in Flugrichtung zeigt - derselbe Schub bzw. Vortrieb erzeugen, den ein vergleichsweise stärkerer, dadurch in der Regel schwerer Schubmotor erzielen würde, der nicht kontinuierlich an die Flugrichtung angepasst wird. Die daraus folgende Gewichtsreduzierung des Antriebs sorgt insgesamt für eine verbesserte Sitzposition bzw. Sitzhaltung des Piloten und ermöglicht eine direktere Steuerung des Gleitschirms, da der Pilot näher am Gleitschirmeinhängepunkt gelagert und damit näher am Schwerpunkt angeordnet ist. Die übliche Einleitung von Flugmanövern bzw. Flugrichtungsänderungen mittels Gewichtsverlagerung wird ebenfalls begünstigt. Zudem können ggf. auch Kosten für den Antrieb eingespart werden.

Eine solche Aufstiegshilfe ist auch unabhängig von der erfindungsgemäßen Idee, auch ein pilotennahes Drehgelenk am Abstandselement auszubilden, vorteilhaft. Die Aufstiegshilfe kann daher auch für andere Gleitschirme mit einem Gurtzeug zum Tragen eines Piloten genutzt werden, die einen in einem Drehgelenk schwenkbaren Schubmotor mit einem klappbaren Rotor, ein längliches Abstandselement zur Beabstandung des Schubmotors in Flugrichtung hinter dem Piloten und vorzugsweise eine Anzahl von, vorzugweise am Piloten in Flugrichtung vorbeilaufenden, Schubstangen umfassen. Sie kann also auch als eine eigenständige vorteilhafte Idee gesehen werden. Besondere synergetische Effekte ergeben sich jedoch bei einer Kombination der beiden Ideen.

Vorzugsweise kann die Aufstiegshilfe auch mit einer Anzahl von Beschleunigungssensoren, Kreiselinstrumenten, z. B. Gyroskopen zur aktiven Lageregelung, Hall-Sensoren, Magnetometern und/oder Neigungsmessern ausgestattet sein. Beispielsweise können zur Messung eines Pilotenanstellwinkels bzw. Sitzwinkels des Piloten relativ zur Erdoberfläche bzw. Bodenachse Beschleunigungssensoren (zur Korrektur und Messung der Orientierung eines stationären Gegenstands in Bezug auf die Erdoberfläche) in Kombination mit Gyroskopen (zur Messung zumindest einer Winkel- bzw. Rotationsgeschwindigkeit) verwendet werden. Konkret kann der betreffende Winkel im Wesentlichen durch Integration der mittels des Gyroskops gemessenen Winkelgeschwindigkeiten erfasst werden, wobei die Beschleunigungssensoren langfristig zur Korrektur eines Sensordrifts des Gyroskops genutzt werden. Diese Sensorkombination kann sowohl auf dem Abstandselement (zur Ermittlung des Sitzwinkels des Piloten relativ zum Abstandselement) als auch im Bereich des Schubmotors (zur Überwachung des Anstellwinkels des Schubmotors relativ zum Abstandselement) angeordnet sein. Auf Basis der mit diesen Komponenten gemessenen bzw. ermittelten Daten kann dafür gesorgt werden, dass eine, vorzugsweise kontinuierliche, Ausrichtung einer Wirkungsrichtung des Schubmotors entgegen der Flugrichtung, also "nach hinten" erfolgt bzw. erreicht wird, zumindest solange der Rotor des Schubmotors rotiert. Mit anderen Worten kann der Schubmotor im Betrieb - also solange der Rotor nennenswert rotiert - stets derart ausgerichtet sein, dass eine Rotationsebene des Rotors des Schubmotors im Betrieb normal zur Flugrichtung ausgerichtet ist. "Kontinuierlich" meint hier, dass der Rotor nach Möglichkeit stets, d. h. innerhalb einer zu vernachlässigenden Zeit, in einer Rotationsebene normal bzw. senkrecht zur Strömungsrichtung bzw. Flugrichtung rotiert und ausgerichtet gehalten wird.

Zusätzlich oder alternativ kann auf Basis der durch die oben beschriebenen Komponenten gemessenen bzw. gewonnenen Daten damit auch eine Ausrichtung des Rotors mit einer Längsrichtung der Rotorblätter parallel zur Flugrichtung eingestellt werden, zumindest wenn der Rotor nicht rotiert. Wenn also der Schubmotor nicht im Betrieb ist (d. h. der Rotor nicht nennenswert rotiert und der Schubmotor ausgeschalten ist), kann er vorzugsweise so ausgerichtet sein, dass er einen minimalen parasitären Luftwiderstand erzeugt. Der Rotor bzw. Schubmotor befindet sich dann also in einem Ruhemodus, in dem die Rotorblätter in einer Ruheposition angeordnet sind, in der sie, vorzugsweise automatisch, mit ihrer Längserstreckung stromlinienförmig, parallel zur Luftströmung bzw. Flugrichtung gehalten werden. Die Ruheposition kann dabei konkret mittels im Schubmotor integrierter Hall-Sensoren (zur Feststellung der aktuellen Propellerposition) angesteuert werden, in dem über ein iteratives PID-Verfahren, z. B. mittels eines PID-Reglers (Proportional-Integral-Differential-Regler) während des Abbremsvorgangs die gewünschte Ruheposition bestimmt wird. Alternativ oder zusätzlich kann die Propellerposition bevorzugt mittels einer 3D-Kamera bzw. Tiefenkamera, besonders bevorzugt mittels einer Stereokamera, ermittelt werden. Die Tiefenkamera ist dabei bevorzugt im Bereich des Gurtzeugs, also am Rücken des Piloten, angeordnet und weist zum Propeller. Die Auswertung der mittels der Kamera akquirierten Daten (die mit Hilfe einer Objekterkennung analysiert werden können, um Positionsdaten daraus zu ermitteln) erfolgt ebenso wie die bevorzugt darauf basierende Regelung der Rotorposition besonders bevorzugt mittels eines Mikrocontrollers, auf dem ein entsprechender Regelungsalgorithmus implementiert ist.

Die zuvor beschriebenen Regelungen können besonders vorteilhaft sein, wenn einfachere Schubmotoren ohne Möglichkeit der Ansteuerung konkreter Haltepositionen verwendet werden sollen. Des Weiteren kann die Effizienz des Schubmotors gesteigert werden, insbesondere im Ruhemodus der parasitäre Luftwiderstand minimiert und/oder im Betrieb der Vortrieb maximiert werden. Idealerweise können damit auch kritische Flugwinkel, z. B. bedingt durch fehlerhaftes Flugverhalten oder Turbulenzen, ausgeglichen werden.

Bevorzugt kann die elektrische Aufstiegshilfe eine Antriebswelle umfassen, die den Schubmotor und den Rotor koppelt. Dabei kann der Rotor besonders bevorzugt eine Mehrzahl von starr mit der Antriebswelle gekoppelten Rotorblättern aufweisen.

Ganz besonders bevorzugt kann der Rotor zwei Rotorblätter umfassen, die gemeinsam die bereits oben erwähnte Längsrichtung des Rotors bilden, d. h. sie liegen vorzugsweise einander gegenüberliegend exakt in einer Flucht. In Längsrichtung addiert definieren die beiden einzelnen Rotorblätter damit den Durchmesser einer Rotationsebene des Rotors. Aus diesem Durchmesser wiederum ergibt sich der oben beschriebene Sicherheitsabstand zum Piloten. Dementsprechend kann das Abstandselement in seiner Längserstreckung vorzugsweise zumindest die Länge des halben, besonders bevorzugt des ganzen Durchmessers der Rotationsebene des Rotors umfassen. Mit anderen Worten kann ein Mittelpunkt, also ein Kopplungspunkt des Rotors mit der Antriebswelle, des Rotors der Aufstiegshilfe vorzugsweise um mindestens eine Rotorblattlänge in Längsrichtung eines Rotorblatts vom Piloten beabstandet sein.

Da der Schubmotor als Ganzes relativ zum Abstandselement schwenkbar ist, kann hier insbesondere darauf verzichtet werden, dass der Schubmotor und der Rotor zueinander klappbar ausgebildet sind. Die Schwenkmechanik ist also insbesondere nicht mit klappbaren Rotorblättern gleichzusetzen, da solche Rotorblätter relativ zur Antriebswelle geklappt werden, d. h. das Schwenken zwischen dem Schubmotor und dem Rotor stattfindet. Dies ist hier nicht der Fall. Diese Art der Schwenkmechanik ist gegenüber herkömmlichen schwenkbaren Rotorblättern deutlich weniger komplex und ausfallanfällig und ist zudem erheblich kostengünstiger.

Vorzugsweise kann mindestens eines, bevorzugt ein zum Piloten weisendes, Rotorblatt des Rotors in einer Gleitflugphase mittels einer aerodynamisch, vorzugsweise im Wesentlichen parallel zur Flugrichtung, verlaufenden Verkleidung zumindest teilweise, vorzugsweise zumindest entlang des Abstandselements, bedeckt bzw. verkleidet sein. Damit kann das zum Pilot weisende Rotorblatt zumindest jedoch über eine Rotorblattlänge eingekleidet sein, so dass ein am Pilot vorbeiströmender Gegenwind bzw. Luftstrom vorteilhaft stromlinienförmig zumindest an diesem Rotorblatt, vorzugsweise zusätzlich auch am Schubmotor, vorbeigeführt werden kann.

Die Verkleidung kann hierzu vorzugsweise mit einer stromlinienförmigen Außenform geformt sein, um den Luftwiderstand des ansonsten freistehenden Rotorblatts, sowie vorzugsweise auch des Schubmotors, zu reduzieren. Besonders bevorzugt kann sie mit einem reibungsarmen Material ausgebildet sein, um den Luftwiderstand weiter zu senken. Die Verkleidung kann sich vorzugsweise vom ersten Drehgelenk hinter dem Piloten bis zum zweiten Drehgelenk erstrecken. Dabei kann sie vorzugsweise einen Schlitz (vorzugsweise mit einem verschließbaren Deckelteil zum Öffnen bzw. Schließen) aufweisen, durch welchen sich der Rotor bzw. zumindest das in Flugrichtung vordere Rotorblatt in einen Windschattenbereich innerhalb der Verkleidung eindrehen und/oder einschwenken lässt. Vorzugsweise lässt sich dabei auch der Schubmotor in den Windschattenbereich schwenken, zumindest wenn seine Außenform einen unerwünschten Luftwiderstand erzeugen würde.

Wie bereits oben erwähnt kann die erfindungsgemäße Aufstiegshilfe vorteilhafterweise mit beliebigen, bereits existenten, herkömmlichen Gleitschirmen verwendet bzw. betrieben werden. Ebenso ist es jedoch möglich, neu zu fertigende Gleitschirme bereits bei der Fertigung mit einer erfindungsgemäßen Aufstiegshilfe auszustatten.

Um die Sicherheit des Piloten zu erhöhen und eine besonders einfache und schnelle Auslösung des Rettungsgeräts bzw. Notschirms zu ermöglichen, umfasst die Aufstiegshilfe zumindest ein Kopplungsmittel zu den Schultergurten des Gurtzeugs zum Auslösen des Rettungsgeräts bzw. Notschirms. Das Auslösen des Rettungsgeräts über ein oder mehrere Kopplungsmittel zu den Schultergurten umfasst bevorzugt zugleich die Entkopplung des Piloten von der Aufstiegshilfe, insbesondere des Abstandselements, Motors, Rotors und eines Energiespeichers. Dadurch kann der Pilot vorteilhafterweise im Notfall, z. B. bei einem Motor- und/oder Energiespeicherbrand, möglichst sofort bzw. im selben Augenblick von den brennenden Komponenten separiert werden und kann selber sicher mittels des Rettungsgeräts landen. Um dabei zu verhindern, dass die vom Piloten entkoppelte Aufstiegshilfe nach der Trennung im freien Fall größere Schäden verursacht, kann diese ebenfalls mit einem Notschirm ausgestattet sein, der zumindest die Fallgeschwindigkeit erheblich verlangsamt und so für eine möglichst sichere Landung der Aufstiegshilfe sorgt.

Vorzugsweise könnte die Aufstiegshilfe, um besonders sicher zu sein, zudem so ausgebildet sein, dass sie bei Bewusstlosigkeit des Piloten automatisch die Kopplungsmittel zu den Schultergurten für das Rettungsgerät auslöst. Insbesondere kann, wenn dies erwünscht ist, bei Unterschreiten einer vorgegebenen Flughöhe, z. B. während ein "Flugmodus" aktiv ist, der Notschirm automatisch durch die Aufstiegshilfe ausgelöst werden. Dabei könnte der Pilot dann im Normalfall dazu aufgefordert werden für eine reguläre Landung zunächst in einen "Landemodus" zu wechseln, in dem diese Funktion deaktiviert oder zumindest entsprechend modifiziert ist.

Die Erfindung wird im Folgenden unter Hinweis auf die beigefügten Figuren anhand eines Ausführungsbeispiels noch einmal näher erläutert. Dabei sind in den verschiedenen Figuren gleiche Komponenten mit identischen Bezugsziffern versehen. Die Figuren sind in der Regel nicht maßstäblich. Es zeigen:
- Figur 1: eine schematische Seitenansicht eines Ausführungsbeispiels eines Gleitschirms (nur grob schematisch symbolisiert) mit einer erfindungsgemäßen Aufstiegshilfe mit einem Gurtzeug zum Tragen eines Piloten, einem Piloten und einem verkleinerten Gleitschirm, hier in einer Gleitflugphase,
- Figur 2: eine schematische Seitenansicht des Gleitschirms mit der Aufstiegshilfe nach Figur 1 in einer Anlaufphase,
- Figur 3: eine schematische Seitenansicht des Gleitschirms mit der Aufstiegshilfe nach Figur 1 in einer Antriebsphase,
- Figur 4: eine perspektivische Ansicht auf einen Schubmotor (in einer Antriebsphase) der Aufstiegshilfe nach Figur 3,
- Figur 5: eine schematische Seitenansicht auf einen Schubmotor (in einer Gleitflugphase) der Aufstiegshilfe nach Figur 1,
- Figur 6: eine schematische Seitenansicht auf einen Schubmotor (in einer Gleitflugphase) bei einer anderen Variante der Aufstiegshilfe nach Figur 1,
- Figur 7: eine schematische perspektivische Ansicht von einem Schubmotor und einer Schwenkmechanik (in einer Antriebsphase) bei einer weiteren Variante der Aufstiegshilfe nach Figur 1,
- Figur 8: eine schematische Seitenansicht auf den Schubmotor und die Schwenkmechanik (in einer Antriebsphase) nach Figur 7,
- Figur 9: eine schematische Seitenansicht auf den Schubmotor und die Schwenkmechanik nach Figur 7 in einer Gleitphase.

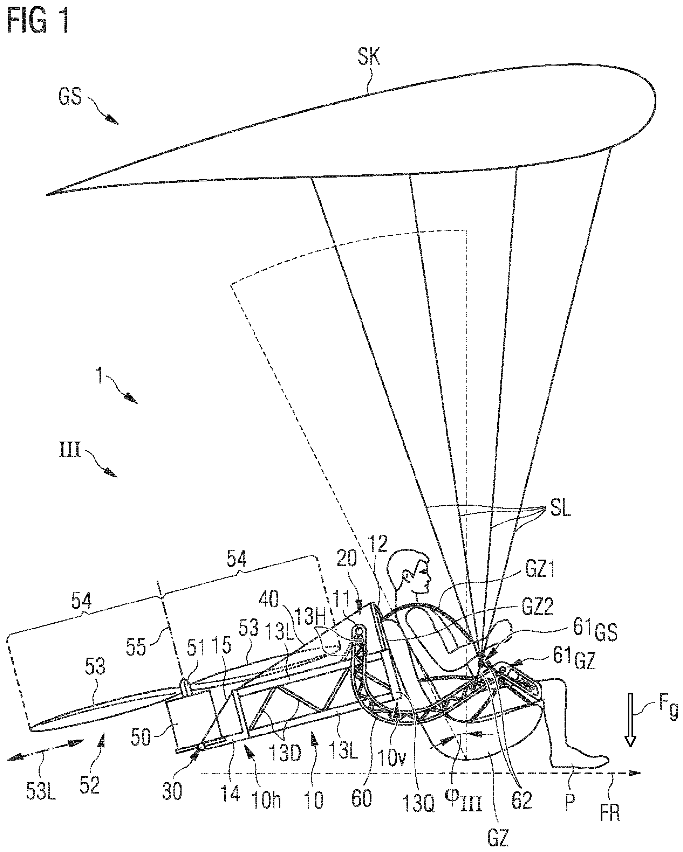

Anhand der Figuren 1 bis 3 wird nun zunächst ein bevorzugtes Ausführungsbeispiel eines erfindungsgemäßen Gleitschirms GS mit einer erfindungsgemäßen Aufstiegshilfe 1 beschrieben, wobei die Aufstiegshilfe 1 für einen Gleitschirm GS mit einem Gurtzeug GZ zum Tragen eines Piloten P ausgebildet ist.

Das hier gezeigte Gurtzeug GZ ist ein beliebiges handelsübliches Gurtzeug für den Gleitschirmbereich, welches zumindest zwei Schultergurte GZ1 und eine Rückenplatte GZ2 als Anschlag GZ2 aufweist. Es umfasst selbstverständlich auch die üblichen Komponenten handelsüblicher Gurtzeuge. Da diesen Komponenten hier jedoch keine besondere Bedeutung zukommt, sind sie nicht weiter erläutert.

Das Gurtzeug GZ sowie der Pilot P gehören nicht zur erfindungsgemäßen Aufstiegshilfe, sondern sind nur zu Anschauungszwecken dargestellt. Gleichermaßen könnte anstatt des hier lediglich symbolisch dargestellten erfindungsgemäßen Gleitschirms GS auch ein beliebiger bestimmungsgemäß zu verwendender Gleitschirm für den motorlosen oder motorbetriebenen Gleitflug für einen einzelnen Piloten P oder einen Tandemflug mit zwei Piloten verwendet werden. Solche Gleitschirme GS umfassen wie üblich unter anderem eine Schirmkappe SK, Stammleinen SL und hier nicht dargestellte Brems- bzw. Steuerleinen. Relative Richtungsangaben wie "oben", "unten", "vorne", "hinten", "seitlich", "oberhalb", "unterhalb", "vor dem Piloten", "hinter dem Piloten", "vertikal", "horizontal" etc. beziehen sich auf eine bestimmungsgemäß für den Flugbetrieb in Flugrichtung FR ausgerichtete (bzw. in einer Flugphase I, II, III, IV befindliche) und/oder in Flugrichtung FR fortbewegende Aufstiegshilfe 1.

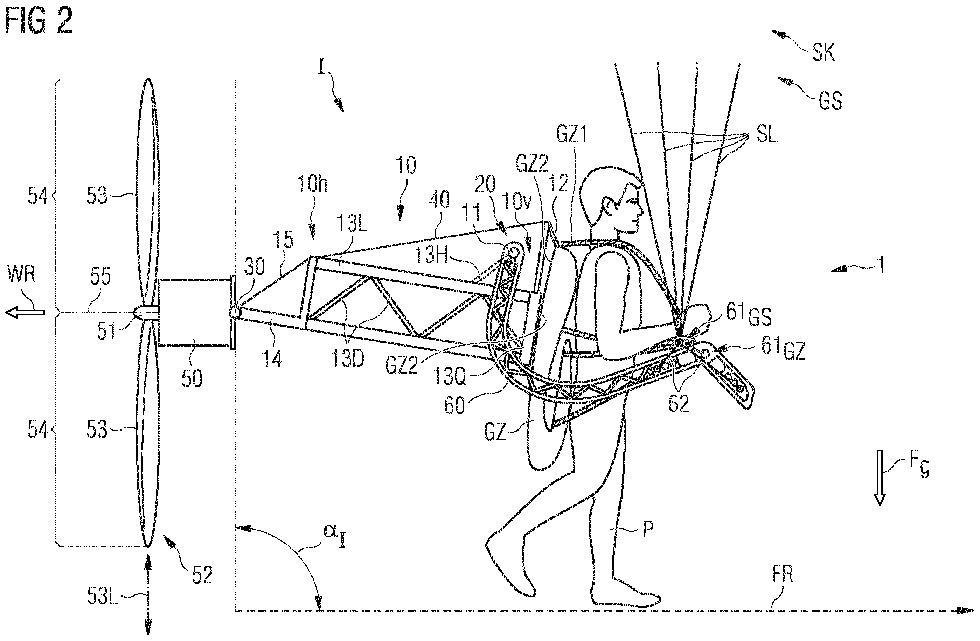

Wie aus der schematischen Seitenansicht einer Momentaufnahme der (bemannten) Aufstiegshilfe 1 in einer Gleitflugphase III (Erläuterung weiter unten) in Figur 1 hervorgeht, gehören neben einem Schubmotor 50 als Antrieb zu den Hauptkomponenten dieser Aufstiegshilfe 1 ein Abstandselement 10 zur Beabstandung des Schubmotors 50 (in zumindest einem Sicherheitsabstand 54) vom Piloten P, Schubstangen 60 zur Übertragung des Schubs des Schubmotors 50 über das Gurtzeug GZ auf den Gleitschirm GS sowie Drehgelenke 30, 20, die sich zwischen dem Abstandselement 10 und dem Schubmotor 50 bzw. den Schubstangen 60 befinden. Wie aus Figur 2 abzuleiten ist, ist die Aufstiegshilfe 1 zumindest so leicht, dass gewährleistet ist, dass ein nahezu beliebiger erwachsener Pilot P die Aufstiegshilfe 1 (zumindest während einer kurzen, ebenso weiter unten noch erläuterten Anlaufphase I) tragen kann.

Wie hier in Figur 1 zu sehen ist, ist der Gleitschirm GS, genauer gesagt die Schirmkappe SK des Gleitschirms GS, über straffe, tragende Stammleinen SL mit der Aufstiegshilfe 1 in einem Gleitschirmeinhängepunkt 61_{GS} in einer Flugrichtung FR vor dem Piloten P verbunden bzw. gekoppelt. An den beiden Schubstangen 60 (die sich allerdings in Richtung in die Darstellungsebene hinein gegenseitig verdecken, so dass nur eine der beiden zu erkennen ist) ist der Gleitschirmeinhängepunkt 61_{GS} selbst jeweils wiederum über zwei in der Länge voreinstellbare bzw. trimmbare Leinen 62 mit der betreffenden Schubstange 60 an einem vorderen Endabschnitt der im Wesentlichen hakenähnlichen Schubstangen 60 verbunden. In Flugrichtung FR (hier nach rechts) weiter vorne, zwischen diesen beiden ein wenig voneinander beabstandeten Aufhängepunkten der beiden Leinen 62 an den Schubstangen 60, befindet sich ein Gurtzeugaufhängepunkt 61_{GZ}, in welchem das oben erwähnte Gurtzeug GZ zum Tragen des Piloten P eingehängt ist. Die Leinen 62 verlaufen hier also unter der Zugbelastung durch den Gleitschirm GS wie die Schenkel eines Dreiecks zusammen, wobei der Gleitschirmeinhängepunkt 61_{GS} im Scheitelpunkt (hier oben) angeordnet ist. Als Aufhängepunkte für die Leinen 62, die zum Gleitschirmeinhängepunkt 61_{GS} führen, kann jeweils eines der drei, direkt hintereinander befindlichen Löcher bzw. Ösen im vorderen Bereich jeweils rechts und links neben dem lokalen Maximum der Schubstangen 60 gewählt werden. Zusätzlich kann die jeweilige Länge der Leinen 62 - entsprechend wie oben beschrieben - getrimmt bzw. eingestellt werden. Wie im Gleitschirmbereich üblich, werden hierzu einfach zwei am Gurtzeug GZ befindliche oder zumindest lösbar einhakbare Karabiner (die sich wie auch die Schubstangen 60 zuvor gegenseitig verdecken, so dass nur einer davon schematisch angedeutet ist) zur Kopplung verwendet. Beim nicht erfindungsgemäßen, motorlosen Gleitschirmbetrieb ohne die Aufstiegshilfe 1 werden dieselben Karabiner üblicherweise direkt miteinander sowie mit den Stammleinen SL des Gleitschirms GS zur Verbindung des Gurtzeugs bzw. des Piloten mit dem Gleitschirm gekoppelt. In Flugrichtung FR hinter dem Piloten P schließt sich an die Schubstangen 60 das oben bereits genannte, längs in Flugrichtung FR erstreckende Abstandselement 10 an. Es ist in einem ersten Drehgelenk 20 der Schubstangen 60 auf Höhe eines hinteren Endabschnitts der Schubstangen 60 drehbar gelagert.

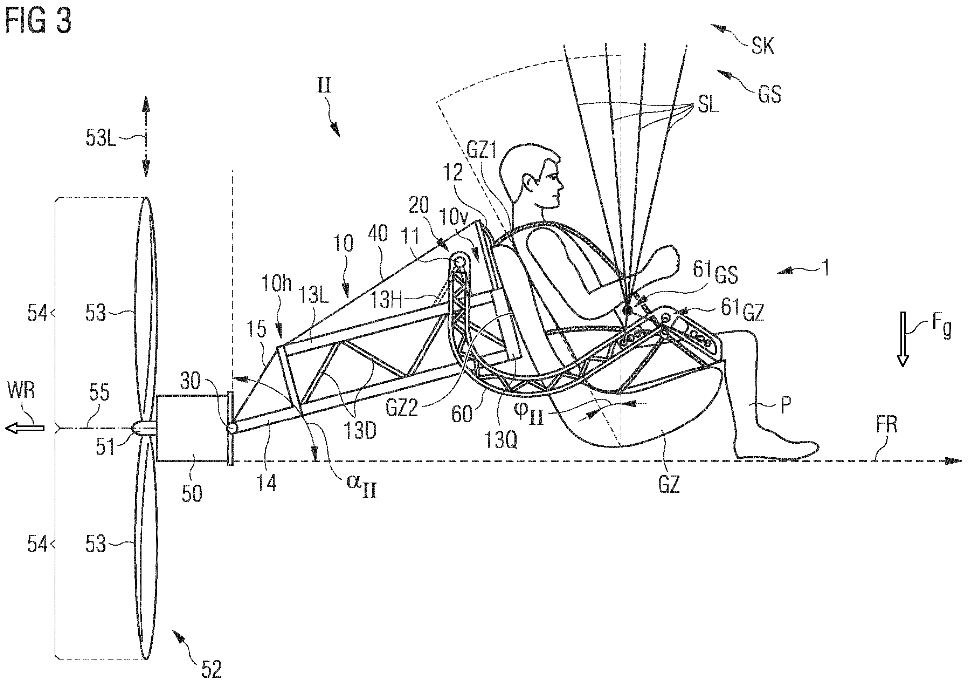

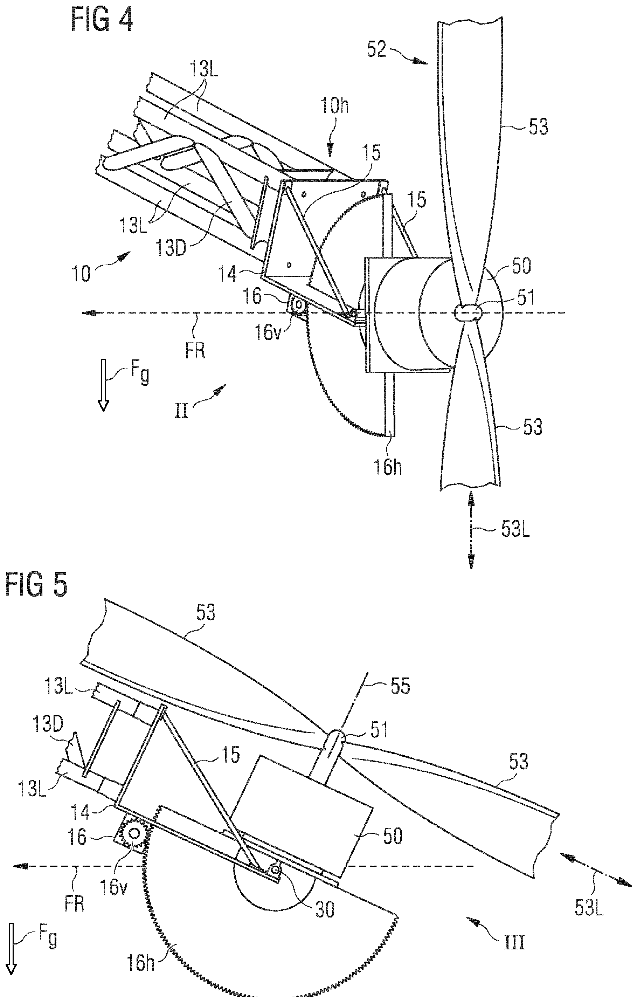

In Flugrichtung FR am hinteren Ende 10h des Abstandselements 10 wiederum folgt darauf der oben bereits erwähnte Schubmotor 50. Er ist hier mittels einer Schwenkmechanik 30 als zweites Drehgelenk 30 drehbar bzw. schwenkbar zum Abstandselement 10 gelagert. Mithilfe der Schwenkmechanik 30 (Details siehe Figur 4 und 5) im bzw. am zweiten Drehgelenk 30 passt er sich dauerhaft motorisch gesteuert möglichst exakt und kontinuierlich an die vorliegende Flugrichtung FR an. Kommt es beispielsweise aufgrund eines Flugmanövers zu einer Flugrichtungsänderung, orientiert sich der Schubmotor 50 nach Möglichkeit entsprechend von selbst in der neuen Flugrichtung FR, um einen maximalen Wirkungsgrad beizubehalten, so dass also eine Wirkungsrichtung WR des Schubmotors 50 mit der Flugrichtung FR übereinstimmt, wie beispielsweise in Figur 3 gezeigt ist.

Um Vortrieb bzw. Schub zu erzeugen, weist der Schubmotor 50 eine Luftschraube bzw. einen Rotor 52 mit zwei in einer Längsrichtung 53L verlaufenden, einander gegenüberliegenden Rotorblättern 53 mit jeweils einer Rotorblattlänge 54 auf, wie auch in Figur 4 oder 5 zu sehen ist. Der oben bereits erwähnte Sicherheitsabstand 54 ist hierbei als eine solche Rotorblattlänge 54 definiert. Die beiden Rotorblätter 53 sind in einem Mittelpunkt 55 bzw. einer Mittelpunktachse 55 des Rotors 52 verbunden, die zugleich eine Rotationsachse einer zugehörigen Antriebswelle 51 definiert. Die Antriebswelle 51 verbindet den Schubmotor 50 starr - d. h. vorzugsweise ohne ein klassisches Dreh-, Schlag- und Schwenkgelenk, wie es beispielsweise bei einem Rotor eines Hubschraubers verwendet wird - mit dem Rotor 52. Mit anderen Worten sorgt sie also sowohl für eine Übertragung der Rotation von einem rotierenden Antriebskörper innerhalb des Schubmotors 50, als auch für eine gleichbleibende Orientierung des Schubmotors 50 relativ zur Rotationsebene des Rotors 52.

Bevor nun die jeweiligen Flugphasen I, II, III, IV unter anderem anhand der unterschiedlichen Anordnung der Aufstiegshilfe 1 in den Figuren 1 bis 3 beschrieben werden, wird zunächst auf einzelne, komplexere Komponenten der Aufstiegshilfe 1 detaillierter eingegangen.

Die insbesondere in Figur 2 und 3 in einer vergrößerten Darstellung im bestimmungsgemäßen Gebrauch gezeigten Schubstangen 60 weisen, wie oben bereits genannt, eine hakenähnliche Form auf. Genauer gesagt sind sie jeweils mit einer "geöffneten" bzw. konkaven Seite dieser "Hakenform" bzw. "?"-ähnlichen Form (ohne Punkt) im bestimmungsgemäßen Gebrauch nach oben angeordnet. Hinter dem Piloten P definiert eine Spitze bzw. der hintere Endabschnitt der Schubstangen 60 einen höchsten Punkt dieses geradlinig (nach oben) auslaufenden Hakens, der gleichzeitig das oben beschriebene erste Drehgelenk 20 beinhaltet. In diesem ersten Drehgelenk 20 sind beide Schubstangen über eine längliche drehbare Achse bzw. Welle 11 verbunden, an welcher das Abstandselement 10 mittig befestigt ist, so dass es sich gegen die Schubstangen 60 drehen lässt.

Von der Spitze bzw. vom hinteren Endabschnitt der Schubstangen 60 über Schulterhöhe des Piloten P verlaufen diese jeweils in einem Bogen unterhalb der Ellbogen des Piloten P hindurch in Flugrichtung FR nach vorne. Dabei verlaufen sie nach diesem relativen Minimum, das kurz hinter dem Piloten P sowie schräg unterhalb der Ellbogen positioniert ist, wieder (relativ dazu leicht nach oben) in etwa bis auf Bauchnabelhöhe des Piloten P. Die Form der Schubstangen 60 verläuft also grob entlang der (hier nach vorne) abgewinkelten Arme des Piloten P.

Im weiteren Verlauf sind die Schubstangen 60 dann in einem 45° Winkel schräg nach vorne unten geknickt geformt und enden nach ca. einer Unterarmläge des Piloten P an einem vorderen Endabschnitt der Schubstangen 60. Vor und nach dem relativen Maximum sind jeweils die drei oben bereits erwähnten Ösen bzw. Löcher (als wählbares Paar von Aufhängepunkten für den Gleitschirmeinhängepunkt 61_{GS} oder auch möglicherweise als Gurtzeugaufhängepunkt 61_{GZ}) in den Schubstangen 60 ausgebildet, in denen sich die Leinen 62 wie erwähnt je nach gewünschter Trimmung in jeweils einem der Löcher befestigten bzw. einhängen lassen.

Mit dieser geschwungenen Form sorgen die Schubstangen 60 für eine ideale, Steuerspielraum bietende Kraftübertragung der vor dem Piloten P befindlichen Komponenten auf die hinter dem Piloten P befindlichen Komponenten bzw. umgekehrt. Durch entsprechend austarierte bzw. getrimmte Anordnung des Piloten P entlang der Schubstangen 60 mittels der oben erwähnten Leinen 62 - die somit also eine Art "Lastaufnahmemittel" bilden - relativ zum übrigen Gewicht der Aufstiegshilfe 1 (überwiegend hinter dem Piloten P), herrscht stets ein Gleichgewicht relativ zum Drehpunkt bzw. Gleitschirmeinhängepunkt 61_{GS} vor dem Piloten P.

Vor dem Piloten P können die Schubstangen 50 bei Bedarf zur grundsätzlichen Stabilisierung zumindest mit ausreichend Spiel zum Steuern, z. B. durch einen Querträger oder dergleichen, miteinander verbunden sein.

Das bereits erwähnte Abstandselement 10 weist zur Kopplung mit dem ersten Drehgelenk 20 zwei Haltestreben 13H bzw. Halteschenkel 13H auf, die von zwei in Flugrichtung FR voneinander beabstandeten Punkten des Abstandselements 10 nach Art einer "Zweipunktaufhängung" abstehen und mit der Welle 11 des ersten Drehgelenks 20 verbunden sind, so dass das Abstandselement 10 relativ zum ersten Drehgelenk 20 der Schubstangen 60 drehbar gelagert ist.

Weiter besteht das Abstandselement 10 (hier als eine Art "Gerüstelement") aus vier (siehe Figur 4) in Längsrichtung des Abstandselements 10 verlaufenden Längsteilen 13L bzw. Längsstreben 13L, die untereinander mittels geeigneter Verstrebungen 13D bzw. Diagonalstreben 13D verknüpft sind. In Längsrichtung an einem pilotennahen Ende 10v des Abstandselements 10 münden die Längsstreben 13L in einer Querstrebe 13Q bzw. Querplatte 13Q, die bei entsprechender Anordnung gegen die (i. d. R. gepolsterte) Rückenplatte GZ2 des Gurtzeugs GZ anschlägt, wie dies beispielsweise in der Anlaufphase I bei einem Winkel α _{I} des Schubmotors 50 zur Flugrichtung FR gemäß Figur 2 der Fall ist.

In Längsrichtung an einem pilotenfernen Ende 10h des Abstandselements 10 ist ein rechtwinkliges, zweischenkliges L-Plattenelement 14 angeordnet, welches mit einer ersten Schenkelseite bzw. Befestigungsseite an den Stirnseiten der vier senkrecht stehenden Längsstreben 13L angebracht ist. Mit der anderen (90° dazu orientierten), zweiten Schenkelseite bzw. Plattenseite - in Verlängerung der beiden unteren Längsstreben 13L - bildet es eine plattenförmige, mit einem Einschnitt versehene Aufnahmefläche für den in Figur 1 eingeschwenkten Schubmotor 50. An der vorderen, freien Kante der Plattenseite, wie in Figur 4 oder 5 zu sehen, ist das zweite Drehgelenk 30 wie erwähnt als Schwenkmechanik 30 ausgebildet und angeordnet.

Diese Schwenkmechanik 30 umfasst einen Schrittmotor 16 mit einem kleineren, motorisch steuerbaren, vollkreisförmigen Zahnrad 16v. Die Rotation des Zahnrads 16v wird entsprechend auf eine größere, mit dem kleineren Zahnrad 16v direkt gekoppelte, halbkreisförmige Zahnradscheibe 16h übertragen, die mittig in Querrichtung und bis zur Hälfte der Plattenseite in Längsrichtung in dem besagten Einschnitt gelagert ist und auf einer dem Rotor 52 abgewandten Seite des Schubmotors 50 rückseitig mit diesem gekoppelt ist. Sie lässt sich mittels des Schrittmotors 16 in einem Winkelbereich von -90° bis +90° bewegen bzw. rotieren, wobei sie dabei bei einem Winkel von -90° nahezu vollständig aus dem Einschnitt in der Plattenseite herausgedreht ist (hier nicht dargestellt) und sich der Schubmotor 50 auf einer Unterseite bzw. Außenseite der Plattenseite befindet. Figur 5 zeigt jedoch eine Seitenansicht der anderen (positiven) Extremalstellung (+90°) des Schubmotors 50 im zweiten Drehgelenk 30, in der die Zahnradscheibe 16h maximal in den Einschnitt eingetaucht ist, d. h. sich überwiegend auf der Unterseite der Plattenseite befindet. Diese Stellung des Schubmotors 50 sowie des Rotors 52 entspricht der idealen Ausrichtung in der Gleitflugphase III, die auch in Figur 1 dargestellt ist.

Die hier gezeigte Schwenkmechanik 30 ist aber nicht auf einen Schrittmotor 16 mit Zahnrad 16v und Zahnradscheibe 16h beschränkt. Ebenso könnte beispielsweise direkt ein Schrittmotor bzw. Synchronmotor, ein Schrittmotor mit einer entsprechenden Übersetzung, ein über eine Kardanwelle auf die Rotationsachse umgelenkter Motor oder auch ein Spindelmotor mit Gewindespindel bzw. Spindel verwendet werden.

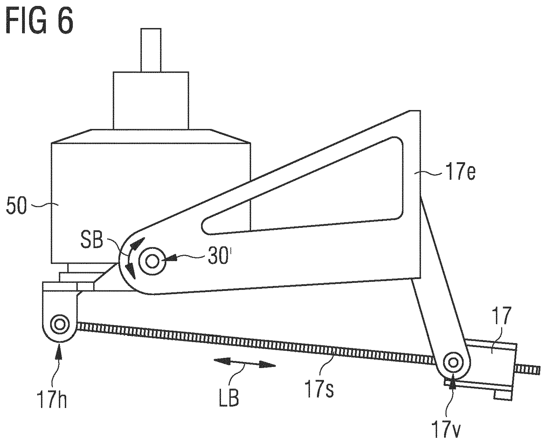

Bei der in Figur 6 dargestellten alternativen Variante mit einem solchen Spindelmotor 17 ist der Schubmotor 50 um ein zweites Drehgelenk 30' schwenkbar. Bei diesem Beispiel befindet sich das Drehgelenk 30' an einem Ende eines starren Übertragungselement 17e, an dem der Schubmotor 50 gelagert ist. Dieses starre Übertragungselement 17e ist hier anstelle des L-Plattenelements 14 an einer vom diesem Ende abgewandten Befestigungsseite mit dem Abstandelement 10, z. B. einem "Gerüstelement" wie in den Figuren 1 bis 5, fest verbunden (in Figur 6 auf der rechten Seite, wobei das Abstandselement hier nicht dargestellt ist).

An einer von diesem starren Übertragungselement 17e (in der Figur nach schräg rechts unten) abstehenden, fest mit dem Übertragungselement 17e verbundenen Strebe ist der Spindelmotor 17 an einem vorderen (bezogen auf die bestimmungsgemäße Ausrichtung zur Flugrichtung, die hier im Gegensatz zu Figur 5 nach rechts verläuft) Spindelgelenk 17v drehbar befestigt. Er bewegt die durch ihn hindurch verlaufende Spindel 17s, an deren weiter entferntem Ende (links) sich ein hinteres Spindelgelenk 17h befindet. An diesem hinteren Spindelgelenk 17h ist der Schubmotor 50 drehbar mit der Spindel 17s verbunden. An dieser Stelle überträgt sich die Längsbewegung LB bzw. Relativbewegung LB in Längsrichtung der Spindel 17s auf den Schubmotor 50 mittels eines "Hebels", der durch den Abstand zwischen den beiden Drehpunkten des Spindelgelenks 17h und des zweiten Drehgelenks 30' gegeben wird. Dadurch wird der Schubmotor 50 um das zweite Drehgelenk 30' in der Schwenkrichtung SB verdreht.

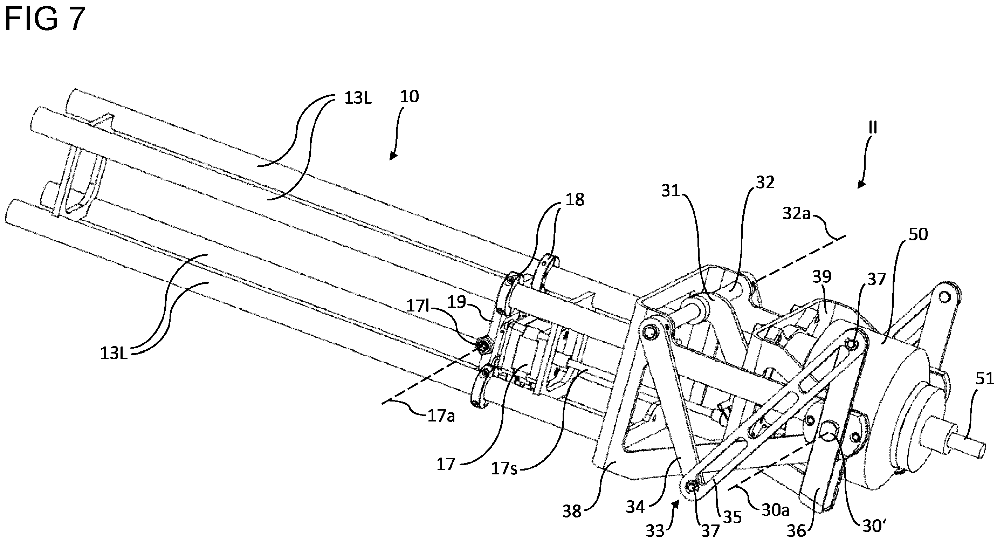

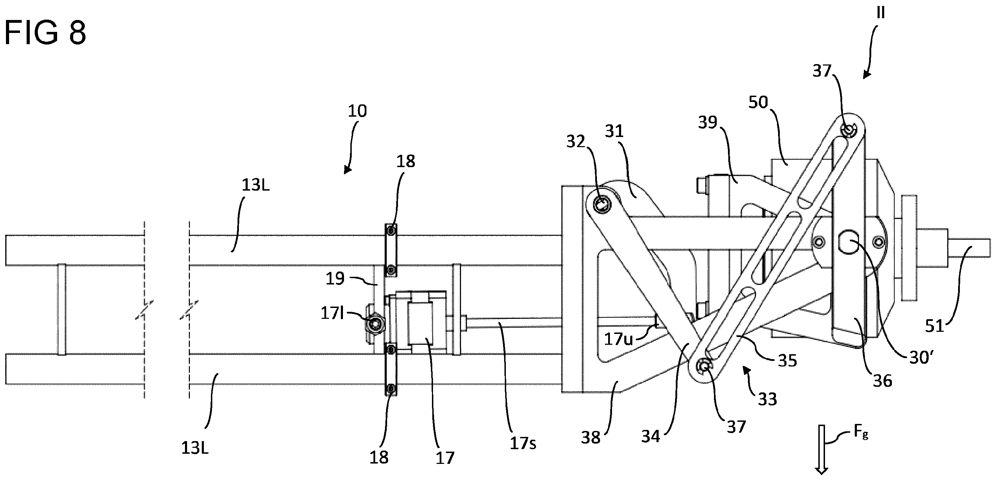

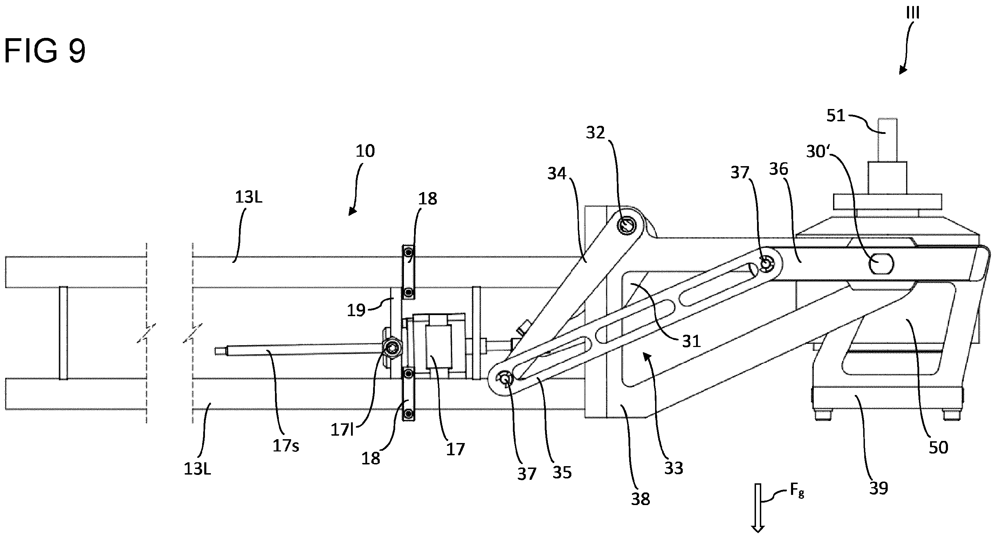

Die Figuren 7 bis 9 zeigen schematisch eine Variante einer Schwenkmechanik 30' für einen Schubmotor 50 eines weiteren Ausführungsbeispiels einer erfindungsgemäßen Aufstiegshilfe 1. Die Figuren 7 und 8 zeigen die Stellung des Schwenkmechanismus 30' für die Antriebsphase II, während Figur 9 die Stellung in der Gleitphase III darstellt. Figur 7 ist dabei in einer perspektivischen Ansicht dargestellt, die Figuren 8 und 9 zeigen Seitenansichten. Die Figuren 7 bis 9 werden im Folgenden gemeinsam beschrieben.

Wie zuvor bereits beschrieben, dient die Schwenkmechanik 30' dazu, den Winkel zwischen dem Motor 50, der Antriebswelle 51 bzw. dem Rotor 52 und dem Abstandselement 10 einzustellen. Das Abstandselement 10 ist bevorzugt ausgebildet, wie bereits anhand von Figur 4 beschrieben, und hier lediglich schematisch durch vier Längsstreben 13L dargestellt. Am pilotenfernen Ende und in Verlängerung des Abstandselements 10 ist eine Aufnahmegabel 38 für den Motor 50 angeordnet und starr mit dem Abstandselement 10 verbunden. Die Aufnahmegabel 38 weist zwei Zinken auf, zwischen denen eine Motorhalterung 39 um eine Motorschwenkachse 30a drehbar in dem - hier zweiteiligen - zweiten Drehgelenk 30' gelagert ist. Die Motorschwenkachse 30a erstreckt sich dabei senkrecht zur Längsrichtung des Abstandselements 10 und im Wesentlichen horizontal. Die beiden Teile des Drehgelenks 30' sind jeweils im Bereich des freien Endes des jeweiligen Zinken angeordnet. Der Motor 50 ist starr mit der Motorhalterung 39 verbunden und mit ihr in Relation zur Aufnahmegabel 38 schwenkbar.

In einem Bereich kurz vor dem pilotenfernen Ende des Abstandselements 10 ist zwischen den vier Längsstreben 13L ein Spindelmotor 17 angeordnet. Der Spindelmotor 17 ist drehbar in einem Spindellager 17I gelagert. Die Lagerung ermöglicht ein gewisses Spiel um eine zur Motorschwenkachse 30a parallele Spindellager-Rotationsachse 17a in Relation zum Abstandselement 10. Mit dem Abstandselement 10 ist das Spindellager 17I über eine Spindelhalterung 19 verbunden, die mittels vier Rohrschellen 18 jeweils an einer der Längsstreben 13L fixiert ist.

Der Spindelmotor 17 treibt eine Spindel 17s an, die sich im Wesentlichen (abgesehen von dem gewissen Spiel im Spindellager 17I) in der Längsrichtung des Abstandselements 10 erstreckt. Mittels des Spindelmotors 17 kann die Spindel also in Richtung des pilotennahen oder in Richtung des pilotenfernen Endes des Abstandselements 10 getrieben werden.

An ihrem pilotenfernen Ende ist die Spindel 17s mit einem Dreharm 31 verbunden. Als Verbindung dient dabei beispielsweise eine starr mit er Spindel 17s verbundene Schäkelförmige Hebelaufnahme 17u. Ein Bolzen der Hebelaufnahme 17u, der die beiden Schenkel des Schäkels miteinander verbindet, erstreckt sich durch ein entsprechend angeordnetes Loch im Dreharm 31. Dadurch ist die Spindel 17s drehbar am und in Relation zum Dreharm 31 mit einer zur Motorschwenkachse 30a parallelen Rotationsachse gelagert.

Der Dreharm 31 ist starr mit einer Dreharmwelle 32 verbunden, sodass sich ihre Dreharm-Rotationsachse 32a ebenfalls parallel zur Motorschwenkachse 30a erstreckt. Die Dreharmwelle ist dabei im Bereich ihrer beiden Enden drehbar jeweils an einem der Zinken der Aufnahmegabel 38 gelagert. Die Dreharmwelle 32 erstreckt sich in Richtung der Dreharm-Rotationsachse 32a ein Stück über die Aufnahmegabel 38 hinaus und ist in diesem Bereich beidseitig starr mit jeweils einem ersten Arm 34 verbunden. Der erste Arm 34 dreht sich also bei einer Drehbewegung des Dreharms 31 und er Dreharmwelle 32 mit. Die beiden ersten Arme 34 sind je mittels eines Gliederlagers 37 drehbar um eine zur Motorschwenkachse 30a parallele Rotationsachse mit je einem zweiten Arm 35 verbunden. Die beiden zweiten Arme 35 sind wiederum je mittels eines Gliederlagers 37 drehbar um eine zur Motorschwenkachse 30a parallele Rotationsachse mit je einem dritten Arm 36 verbunden. Die beiden dritten Arme 36 sind je starr mit der Motorhalterung verbunden und ebenso wie diese drehbar um eine Motorschwenkachse 30a in dem zweiten Drehgelenk 30' gelagert. Die Arme 34, 35, 36 sind als Flachstangen ausgestaltet und bilden eine Gliederkette 33, die zur Kraftübertragung von dem Dreharm 31 auf die Motorhalterung 39 dient.

Insgesamt wird also die vom Spindelmotor 50 erzeugte Bewegung, d. h. der (Vor- bzw. Rück-) Trieb der Spindel 17s, mittels des Dreharms 31, der Dreharmwelle 32 und der Gliederkette 33 als Drehbewegung um die Motorschwenkachse 30a auf die Motorhalterung 39 und somit auch auf den Motor 50 und den Rotor 52 übertragen.

In den Figuren 7 und 8 befindet sich der Motor 50 in seiner Position für die Antriebsphase II. D. h. Die Rotationsachse der Antriebswelle 51 ist im Wesentlichen horizontal ausgerichtet. Um den Motor 50 so zu positionieren, wurde die Spindel 17s vom Spindelmotor 17 zum pilotenfernen Ende des Abstandselements 10 bewegt. Dadurch werden der Dreharm 31 und die Gliederkette 33 so positioniert, dass sich der dritte Arm 36 in vertikaler Richtung erstreckt und mittels der Motorhalterung 39 die Antriebswelle 51 des Motors in horizontaler Richtung ausgerichtet ist.

Für die Gleitphase III (siehe Figur 9) wird die Antriebswelle in eine vertikale Position gebracht. Dazu wir die Spindel 17s mit Hilfe des Spindelmotors 17 in Richtung des pilotennahen Endes des Abstandselements 10 bewegt. Wie bereits beschrieben wird diese Kraft bzw. Bewegung mittels des Dreharms 31 und der Gliederkette 33 so übertragen, dass sich der dritte Arm 36 schließlich in horizontaler Richtung erstreckt und mittels der Motorhalterung 39 der Motor 50 mit der Antriebswelle 51 in vertikaler Richtung ausgerichtet ist.

Da sich der Dreharm 31 und insbesondere sein mit der Spindel 17s verbundenes Ende auf einer Kreisbahn bewegt, ergibt sich auch eine Bewegung der Hebelaufnahem 17u in vertikaler Richtung. Um diese Bewegung bzw. dieses Spiel zu ermöglichen, ist die Spindel 17s bzw. der Spindelmotor 17 in diesem Rahmen drehbar im Spindellager 17I angeordnet.

Mittels den auf beiden Seiten der Aufnahmegabel 39 angeordneten Gliederketten 33, wird eine Schwenkmechanik 30, 30' bereitgestellt, die Unwuchten bei der Verstellung zwischen den Positionen minimiert und gleichzeitig so platzsparend ausgestaltet ist, dass sie den Querschnitt des Abstandselements 10 nicht wesentlich vergrößert.

Die Schwenkmechanik 30, 30' bzw. das zweite Drehgelenk 30, 30' lässt sich somit - wie beispielhaft gezeigt - mit einem Schrittmotor 16 (siehe Figur 4 und 5), sowie alternativ einem Spindelmotor 17 (siehe Figuren 6 bis 9) motorisch gesteuert realisieren, ohne die Erfindung auf die drei hier konkret gezeigten Ausführungsbeispiele zu beschränken.

Vorzugsweise können dann alle Komponenten jeweils, soweit dies möglich ist, entsprechend geschützt verkleidet werden, so dass sie zumindest einen möglichst geringen Luftwiderstand verursachen.

Die Ecken der freien Kanten der beiden Schenkelseiten des L-Plattenelements 14 sind zur Stabilisierung über zwei Zugstreben 15 dreiecksförmig miteinander zugentlastend verbunden, so dass die beiden Plattenseiten auch unter einseitiger Belastung einer der beiden Schenkelseiten in einem 90°-Winkel zueinander gehalten werden. Bei der Belastung kann es sich eben beispielsweise um das Gewicht des besagten Schubmotors 50 samt seines Rotors 52 handeln. Die beiden Zugstreben 15 sind dabei so weit voneinander entfernt, dass zwischen ihnen zumindest genügend Platz für den Schubmotor 50 verbleibt. Dabei ist der Einschnitt wie auch Schubmotor 50 sowie der auf der Unterseite der Plattenseite befestigte Schrittmotor 16 in Querrichtung (senkrecht zur Längsrichtung des Abstandselements 10) mittig zwischen den Zugstreben 15 angeordnet.

Um das oben beschriebene Verfahren - zum Erreichen der in Figur 1 gezeigten Gleitflugphase III - besser veranschaulichen zu können, zeigt Figur 2 deshalb dieselbe Aufstiegshilfe 1, hier allerdings in einem Moment während der Anlaufphase I beim Start von im Wesentlichen ebenem Gelände, wobei das Gelände nicht explizit dargestellt ist.

In der Anlaufphase I trägt der Pilot P das Gewicht der Aufstiegshilfe 1 noch selbst über die im Gurtzeug GZ integrierten Schultergurte GZ1, die hierzu über Kopplungsmittel 12 mit dem Abstandselement 10 und damit mit der Aufstiegshilfe 1 insgesamt gekoppelt sind. Somit sind die Schubstangen 60 gewichtsmäßig während des Anlaufs zumindest solange entlastet, bis der Gleitschirm GS ausreichend Auftrieb (entgegen der Gewichtskraft F_{g} des Gewichts der Aufstiegshilfe 1) erzeugt, dass er den Pilot P und die Aufstiegshilfe 1 alleine trägt. Im besagten Moment, in dem er die sogenannte Abhebegeschwindigkeit erreicht, lässt sich der laufende Pilot P in der Regel nur noch in das Gurtzeug GZ bzw. eine Sitzschale des Gurtzeugs GZ fallen und beginnt bei geeignetem Schub bzw. Vortrieb durch den Schubmotor 50 und entsprechend gewähltem Anstellwinkel der Schirmkappe SK des Gleitschirms GS mit der Aufstiegshilfe 1 in die Höhe zu fliegen. Der Schubmotor 50 kann bei Bedarf, was zumeist notwendig ist, bereits zum Erreichen der Abhebegeschwindigkeit während der Anlaufphase I eingesetzt werden bzw. vorgesehen sein.

Auf die in Figur 2 gezeigte Anlaufphase I folgt bestimmungsgemäß die in Figur 3 dargestellte Antriebsphase II, wobei dort nur eine mögliche Ausrichtung der Aufstiegshilfe 1 beispielhaft gezeigt ist, in der der Schubmotor 50 in einem besonders effektiven Winkel α _{II} zur Flugrichtung FR angeordnet ist. Abhängig von der tatsächlichen durch den Piloten P gewählten Flugrichtung FR, die hier der Einfachheit halber horizontal gewählt wurde, kann sich die genaue Ausrichtung einzelner Komponenten der Aufstiegshilfe 1 (z. B. des Schubmotors 50 zum Abstandselement 10) zueinander selbstverständlich auch während der Antriebsphase II ändern, z. B. bei einem Steigflug, Kurvenflug, Sinkflug oder dergleichen. Da die Komponenten der Aufstiegshilfe 1 aber geeignet zueinander getrimmt gelagert sind, bildet sich stets ein Gleichgewichtszustand zwischen dem Pilot P und der Aufstiegshilfe 1 relativ zum Gleitschirm GS aus.

Spätestens in der Antriebsphase II (siehe Figur 3) sitzt der Pilot P im Normalfall in einem um ca. 25° zur Vertikalen nach hinten geneigten Sitzwinkel φ _{II} in einer bequemen Sitzposition im Gurtzeug GZ. Der Schubmotor 50 sorgt dabei mit dem Rotor 52 für den notwendigen Schub bzw. Vortrieb, so dass die Aufstiegshilfe 1 auch ohne entsprechende Thermik oder thermische Aufwinde geflogen werden, insbesondere steigen kann.

Figur 1 zeigt wie bereits oben erwähnt eine sich an die Antriebsphase II anschließende Gleitflugphase III, in der lediglich Thermik bzw. thermische Aufwinde zum Fliegen genutzt werden. Wie der Name dieser Flugphase III bereits impliziert, fliegt der Pilot P die Aufstiegshilfe 1 motorlos, d. h. der Schubmotor 50 ist ausgeschalten, der Rotor 52 steht still und ist mit seiner Längsrichtung 53L in Flugrichtung FR ausgerichtet bzw. eingeschwenkt. Das Abschalten sowie das Einschwenken des Schubmotors 50 können hier z. B. zuvor durch den Piloten P eingeleitet worden sein, da die nötige Flughöhe und/oder Thermik vorhanden ist. Gerade durch das Einschwenken des Rotors 52 reduziert sich dann der Luftwiderstand bzw. parasitäre Strömungswiderstand der motorisierten Aufstiegshilfe 1 derart, dass ein reiner Gleitflug bzw. Thermikflug begünstigt wird, wobei der Pilot P so austariert ist, dass er mit einer besonders bequemen Sitzposition fliegt. Ein solcher Sitzwinkel φ _{III} dieser Sitzposition in der Gleitflugphase III kann allerdings ebenfalls im Wesentlichen um 25° zur Vertikalen nach hinten geneigt sein, wie dies beim dem oben erwähnten Sitzwinkel φ _{II} in der Antriebsphase II der Fall ist. Tendenziell kann der Pilot P in der Antriebsphase II jedoch etwas weiter "nach hinten" geneigt sitzen (aufgrund des "anschiebenden" Schubmotors 50 in einem "kleineren" Anstellwinkel α _{II} zur Flugrichtung FR) als in der Gleitflugphase III, d. h. der Sitzwinkel φ _{II} ist üblicherweise etwas größer als der Sitzwinkel φ _{III}. Damit kann der Pilot P erfindungsgemäß sowohl im motorbetriebenen als auch im motorlosen Flug effektiv und angenehm fliegen.

Um die Gleitflugeigenschaften weiter zu verbessern, umfasst die Aufstiegshilfe 1 zudem eine Verkleidung 40, die das in der Gleitflugphase III parallel zur Längsrichtung des Abstandselements 10 eingeschwenkte vordere Rotorblatt 53 in einem Bereich oberhalb des Abstandselements 10 sowie im Wesentlichen zwischen den beiden Drehgelenken 20, 30 aerodynamisch verkleidet bzw. verdeckt. Die Verkleidung 40 erstreckt sich hier von einem obersten Punkt am pilotennahen Ende 10v des Abstandselements 10, wo die Kopplungsmittel 12 lösbar am Abstandselement 10 befestigt sind, in einer schrägen, stromlinienförmigen Form (das Rotorblatt 53 zumindest teilweise umgebend) bis zur Oberkante der Befestigungsseite des L-Plattenelements 14 am pilotenfernen Ende 10h des Abstandselements 10. Das betreffende Rotorblatt 53 kann dabei z. B. durch einen oberseitigen oder seitlichen Schlitz in die Verkleidung 40 rotiert bzw. eingeschwenkt werden. Bei Verwendung eines Rotors mit nur einem Rotorblatt und einem entsprechenden Gegengewicht auf der anderen Seite der Drehachse des Rotors kann entweder das Rotorblatt oder alternativ das Gegengewicht in die Verkleidung rotiert werden.

Übliche motorbetriebene Gleitschirme mit Motor und Rotor sowie ggf. einem Schutzkäfig für den Rotor, lassen sich im Gegensatz zum Gegenstand der Erfindung nicht mit der vorteilhaften Sitzposition des motorlosen Gleitflugs fliegen, da der zusätzliche Motor, der über die Schubstangen direkt mit dem Gleitschirm gekoppelt ist, die Sitzhaltung des Piloten derart beeinflusst, dass unter anderem der dadurch erzeugte zusätzliche Luftwiderstand kein nachhaltiges Gleiten, insbesondere über längere Flugzeiten, mehr zulässt.

In der Landephase IV, die hier nicht explizit gezeigt ist, ist der Schubmotor 50 in der positiven Extremalstellung gemäß Figur 5 angeordnet, wobei allerdings der Rotor 52 aus Sicherheitsgründen mit seiner Längsrichtung 53L senkrecht zur Flugrichtung FR (also horizontal quer zur Flugrichtung FR) ausgerichtet bzw. gehalten wird. Damit wird bereits vor dem eigentlichen Aufsetzen bei der Landung präventiv eine potentielle Gefahr für den Piloten P durch den Rotor 52 möglichst minimiert.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. So sind beispielsweise auch andere Motoren wie Hybridmotoren etc. im Rahmen der Erfindung umfasst. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Element" und "Anordnung" nicht aus, dass die betreffende Komponente aus mehreren zusammenwirkenden Teilkomponenten besteht, die gegebenenfalls auch räumlich verteilt sein können.

### Bezugszeichenliste

- 1: Aufstiegshilfe
- 10: Abstandselement
- 10v: pilotennahes Ende des Abstandselements
- 10h: pilotenfernes Ende des Abstandselements
- 11: Welle
- 12: Kopplungsmittel
- 13L: Längsstreben / Längsteile
- 13D: Diagonalstreben / Verstrebungen
- 13H: Haltestreben / Halteschenkel
- 13Q: Querstreben
- 14: L-Plattenelement
- 15: Zugstrebe
- 16: Schrittmotor
- 16h: Zahnradscheibe, halbkreisförmig
- 16v: Zahnrad, vollkreisförmig
- 17: Spindelmotor
- 17s: Spindel / Gewindespindel
- 17v, 17h: Spindelgelenke
- 17e: Übertragungselement
- 17l: Spindellager
- 17a: Spindellager-Rotationsachse
- 17u: Hebelaufnahme
- 18: Rohrschelle
- 19: Spindelhalterung
- 20: erstes Drehgelenk / Drehlager
- 30, 30': zweites Drehgelenk / Schwenkmechanik
- 30a: Motor-Schwenksachse
- 31: Dreharm
- 32: Dreharmwelle
- 32a: Dreharm-Rotationsachse
- 33: Gliederkette
- 34: erster Arm
- 35: zweiter Arm
- 36: dritter Arm
- 37: Gliederlager
- 38: Aufnahmegabel
- 39: Motorhalterung
- 40: Verkleidung
- 50: Schubmotor
- 51: Antriebswelle
- 52: Rotor / Propeller
- 53: Rotorblätter
- 53L: Längsrichtung
- 54: Sicherheitsabstand / Rotorblattlänge
- 55: Mittelpunktachse / Mittelpunkt des Rotors
- 60: Schubstangen
- 61_{GZ}: Gurtzeugaufhängepunkt
- 61_{GS}: Drehpunkt des Gesamtsystems / Gleitschirmeinhängepunkt
- 62: Leinen
- α _{I}: Winkel / Anstellwinkel Schubmotor zur Flugrichtung für die Anlaufphase
- α _{II}: Winkel / Anstellwinkel Schubmotor zur Flugrichtung für die Antriebsphase
- φ _{II}: Sitzwinkel zur Vertikalen in der Antriebsphase
- φ _{III}: Sitzwinkel zur Vertikalen in der Gleitflugphase
- F_{g}: Gewichtskraft
- FR: Flugrichtung / Landeanflugrichtung
- GS: Gleitschirm
- GZ: Gurtzeug
- GZ1: Schultergurte
- GZ2: Anschlag / Rückenplatte
- LB: Längsbewegung / Relativbewegung
- P: Pilot
- SB: Schwenkrichtung
- SK: Tragflächen / Schirmkappe des Gleitschirms
- SL: Stammleinen des Gleitschirms
- WR: Wirkungsrichtung des Schubmotors

- I: Flugphase / Anlaufphase
- II: Flugphase / Antriebsphase
- III: Flugphase / Gleitflugphase
- IV: Flugphase / Landephase

## Patentansprüche

1. Elektrische Aufstiegshilfe (1) für einen Gleitschirm (GS) mit einem Gurtzeug (GZ) zum Tragen eines Piloten (P), wobei die Aufstiegshilfe (1) einen Schubmotor (50) mit einem Rotor (52), ein Abstandselement (10) zur Beabstandung des Schubmotors (50) in einer Flugrichtung (FR) hinter dem Piloten (P), eine Anzahl von Schubstangen (60) und zumindest zwei Drehgelenke (20, 30, 30') umfasst, wobei die Schubstangen (60) mittels eines ersten Drehgelenks (20) schwenkbar an einem ersten pilotennahen Ende (10v) des Abstandselements (10) gelagert sind und wobei der Schubmotor (50) an einem zweiten pilotenfernen Ende (10h) des Abstandselements (10) mittels eines zweiten Drehgelenks (30, 30') schwenkbar gelagert ist.

2. Elektrische Aufstiegshilfe nach Anspruch 1, mit zumindest einem Kopplungsmittel (12), mittels dessen der Pilot (P) in einer Anlaufphase (I) im bestimmungsgemäßen Gebrauch ein Gewicht der Aufstiegshilfe (1) über Schultergurte (GZ1) des Gurtzeugs (GZ) trägt, wobei das Kopplungsmittel (12) vorzugsweise lösbar mit den Schultergurten (GZ1) des Gurtzeugs (GZ) gekoppelt ist.

3. Elektrische Aufstiegshilfe nach Anspruch 1 oder 2, wobei die Aufstiegshilfe (1) so ausgebildet ist, dass der Pilot (P) in einer Antriebsphase (II), vorzugsweise trimmbar, in einem Gurtzeugaufhängepunkt (61_{GZ}) der Schubstangen (60) so eingehängt ist, dass ein Drehmoment, welches durch ein Gewicht der Aufstiegshilfe (1) am ersten Drehgelenk (20) angreift, ausgeglichen ist.

4. Elektrische Aufstiegshilfe (1) für einen Gleitschirm (GS) mit einem Gurtzeug (GZ) zum Tragen eines Piloten (P) nach einem der vorstehenden Ansprüche, wobei die Aufstiegshilfe (1) einen schwenkbaren Schubmotor (50) mit einem Rotor (52) mit zumindest einem Rotorblatt, vorzugsweise zwei Rotorblättern (53), ein längliches Abstandselement (10) zur Beabstandung des Schubmotors (50) in Flugrichtung (FR) hinter dem Piloten (P) und eine Anzahl von Schubstangen (60) umfasst, wobei die Aufstiegshilfe (1) so ausgebildet ist, dass in einer Gleitflugphase (III) zumindest der Rotor (52) des Schubmotors (50) stillsteht und eine Längsrichtung (53L) der zwei Rotorblätter (53) des Rotors (52) im Wesentlichen parallel zur Flugrichtung (FR) ausgerichtet ist.

5. Elektrische Aufstiegshilfe nach einem der vorstehenden Ansprüche, wobei die Aufstiegshilfe (1) so ausgebildet ist, dass das erste Drehgelenk (20) bei einem tragenden Gleitschirm (GS) im bestimmungsgemäßen Gebrauch näher am Gleitschirm (GS) angeordnet ist, als ein Gurtzeugaufhängepunkt (61_{GZ}) und/oder ein Gleitschirmeinhängepunkt (61_{GS}) der Schubstangen (60).

6. Elektrische Aufstiegshilfe nach einem der vorstehenden Ansprüche, wobei zumindest ein Gleitschirmeinhängepunkt (61_{GS}) in Flugrichtung (FR) hinter einem Gurtzeugaufhängepunkt (61_{GZ}), insbesondere vor dem Piloten (P), angeordnet ist und/oder wobei ein Gurtzeugaufhängepunkt (61_{GZ}) mindestens so nah, vorzugsweise näher, am Gleitschirm (GS) angeordnet ist wie ein Gleitschirmeinhängepunkt (61_{GS}).

7. Elektrische Aufstiegshilfe nach einem der vorstehenden Ansprüche, wobei das Abstandselement (10) im Wesentlichen freischwingend, vorzugsweise bestimmungsgemäß gedämpft freischwingend, im ersten Drehgelenk (20) an einem hinteren Ende der Schubstangen (60) gelagert ist,
wobei das erste Drehgelenk (20) vorzugsweise zwei unabhängige, passive Drehlager (20) am jeweiligen, hinteren Ende der jeweiligen Schubstange (60) umfasst, die das Abstandselement (10) gemeinsam freischwingend lagern.

8. Elektrische Aufstiegshilfe (1) für einen Gleitschirm (GS) mit einem Gurtzeug (GZ) zum Tragen eines Piloten (P), insbesondere nach einem der vorstehenden Ansprüche, wobei die Aufstiegshilfe (1) einen in einem Drehgelenk (30, 30') schwenkbaren Schubmotor (50) mit einem Rotor (52) mit vorzugsweise zwei Rotorblättern (53), ein längliches Abstandselement (10) zur Beabstandung des Schubmotors (50) in Flugrichtung (FR) hinter dem Piloten (P) und eine Anzahl von Schubstangen (60) umfasst, wobei das zweite Drehgelenk (30, 30') eine motorisch verstellbare Schwenkmechanik (30, 30') aufweist, wobei die Schwenkmechanik (30, 30') vorzugsweise automatisch gesteuert ist.

9. Elektrische Aufstiegshilfe nach Anspruch 8, umfassend einen Stellmotor (16,17) zur Verstellung der Schwenkmechanik (30, 30'), wobei der Stellmotor bevorzugt als Spindelmotor (17) ausgebildet ist, der eine Spindel (17s) antreibt, und wobei besonders bevorzugt die Schwenkmechanik (30, 30') eine Gliederkette (33) umfasst, die den Trieb der Spindel in eine Schwenkbewegung (SB) des Rotors (52) überträgt.

10. Elektrische Aufstiegshilfe nach einem der vorstehenden Ansprüche, mit einer Anzahl von Beschleunigungssensoren, Kreiselinstrumenten, Hall-Sensoren, Magnetometern und/oder Neigungsmessern, um auf Basis der damit gemessenen Daten eine, vorzugsweise kontinuierliche, Ausrichtung einer Wirkungsrichtung (WR) des Schubmotors (50) entgegen der Flugrichtung (FR) zu erreichen, zumindest solange der Rotor (52) des Schubmotors (50) rotiert, und/oder um auf Basis der damit gemessenen Daten eine Ausrichtung des Rotors (52) mit einer Längsrichtung (53L) der Rotorblätter (53) parallel zur Flugrichtung (FR) zu erreichen, zumindest wenn der Rotor (52) nicht rotiert.

11. Elektrische Aufstiegshilfe nach einem der vorstehenden Ansprüche, mit einer Antriebswelle (51), die den Schubmotor (50) und den Rotor (52) koppelt, wobei der Rotor (52) bevorzugt eine Mehrzahl von starr mit der Antriebswelle (51) gekoppelten Rotorblättern (53), besonders bevorzugt zwei Rotorblätter (53), umfasst.

12. Elektrische Aufstiegshilfe nach einem der vorstehenden Ansprüche, wobei ein Mittelpunkt (55) der Rotorblätter (53) des Rotors (52) um mindestens eine Rotorblattlänge (54) vom Piloten (P) beabstandet ist,
und/oder wobei mindestens ein Rotorblatt (53) des Rotors (52) in einer Gleitflugphase (III) mittels einer aerodynamisch Verkleidung (40) zumindest teilweise, vorzugsweise zumindest entlang des Abstandselements (10), verdeckt ist.

13. Gleitschirm (GS) mit einer elektrischen Aufstiegshilfe (1) nach einem der vorstehenden Ansprüche.

14. Verfahren zum Erreichen einer Gleitflugphase (III) mit einer elektrischen Aufstiegshilfe (1) für einen Gleitschirm (GS) mit einem Gurtzeug (GZ) zum Tragen eines Piloten (P), mit einem Schubmotor (50) aufweisend einen Rotor (52), einem Abstandselement (10) zur Beabstandung des Schubmotors (50) in einer Flugrichtung (FR) hinter dem Piloten (P), einer Anzahl von Schubstangen (60) und zumindest zwei Drehgelenken (20, 30, 30'), umfassend zumindest die folgenden Schritte:
- Anlaufphase (I), in der ein Gewicht der bestimmungsgemäß angeordneten Aufstiegshilfe (1) durch den Piloten (P) getragen wird,
- Antriebsphase (II), unter Verwendung des senkrecht zur Flugrichtung (FR) rotierenden Rotors (52) zur Erzielung eines Vortriebs in Flugrichtung (FR), in der die Schultergurte (GZ1) des Piloten (P) durch Belastung der Schubstangen (60) mit dem Gewicht der Aufstiegshilfe (1) unter Bildung eines Kräftegleichgewichts zwischen dem am Gurtzeug (GZ) hängenden Piloten (P) und dem Schubmotor (50) inklusive Abstandselement (10) entlastet werden,
- Gleitflugphase (III), in der mittels einer Schwenkmechanik (30, 30') eine Längsrichtung (53L) der Rotorblätter (53) des Rotors (52) im Wesentlichen parallel zur Flugrichtung (FR) ausgerichtet, vorzugsweise eingeschwenkt wird, wobei zumindest der Rotor (52) des Schubmotors (50) stillsteht,
- optional zumindest teilweises Verdecken des Rotors (52) in der Gleitflugphase (III) mittels einer aerodynamischen Verkleidung (40), vorzugsweise zumindest entlang des Abstandselements (10),
- optional Landephase (IV), in der die Längsrichtung (53L) der Rotorblätter (53) quer zu einer Landeanflugrichtung (FR), insbesondere horizontal, ausgerichtet wird.

15. Verwendung einer elektrischen Aufstiegshilfe (1) nach einem der Ansprüche 1 bis 12, zur Erreichung einer Gleitflugphase (III) mit einem Gleitschirm (GS), insbesondere startend von im Wesentlichen ebenem Gelände.

## Claims

1. Electric propulsion system (1) for a paraglider (GS) with a harness (GZ) for carrying a pilot (P), where the propulsion system (1) comprises a thrust motor (50) with a rotor (52), a spacer element (10) for spacing the thrust motor (50) in a flight direction (FR) behind the pilot (P), a number of thrust rods (60) and at least two swivel joints (20, 30, 30'), wherein the thrust rods (60) are pivotably mounted on a first end (10v) of the spacer element (10) close to the pilot by means of a first pivot joint (20) and wherein the thrust motor (50) is pivotably mounted on a second end (10h) of the spacer element (10) remote from the pilot by means of a second pivot joint (30, 30').

2. Electric propulsion system according to claim 1, with at least one coupling (12), by means of which the pilot (P) carries the weight of the propulsion system (1) via shoulder straps (GZ1) of the harness (GZ) in a start-up phase (I) in intended use, wherein the coupling means (12) is preferably releasably coupled to the shoulder straps (GZ1) of the harness (GZ).

3. Electrical propulsion system according to claim 1 or 2, wherein the propulsion system (1) is designed in such a way that the pilot (P) is suspended in a drive phase (II), preferably trimmable, in a harness suspension point (61_{GZ}) of the push rods (60) in such a way that a torque, which acts on the first swivel joint (20) by the weight of the propulsion system (1), is balanced.

4. Electric propulsion system (1) for a paraglider (GS) with a harness (GZ) for carrying a pilot (P) according to one of the preceding claims, wherein the propulsion system (1) comprises a pivotable thrust motor (50) with a rotor (52) with at least one rotor blade, preferably two rotor blades (53), an elongate spacer element (10) for spacing the thrust motor (50) in the direction of flight (FR) behind the pilot (P) and a number of thrust rods (60), the propulsion system (1) being designed such that, in a gliding flight phase (III), at least the rotor (52) of the thrust motor (50) is stationary and a longitudinal direction (53L) of the two rotor blades (53) of the rotor (52) is aligned essentially parallel to the direction of flight (FR).

5. Electrical propulsion system according to one of the preceding claims, wherein the propulsion system (1) is designed in such a way that the first swivel joint (20) is arranged closer to the paraglider (GS) than a harness suspension point (61_{GZ}) and/or a paraglider suspension point (61_{GS}) of the push rods (60) in the case of a supporting paraglider (GS) in intended use.

6. Electrical propulsion system according to one of the preceding claims, wherein at least one paraglider suspension point (61_{GS}) is arranged behind a harness suspension point (61_{GZ}) in the direction of flight (FR), in particular in front of the pilot (P), and/or wherein a harness suspension point (61_{GZ}) is arranged at least as close, preferably closer, to the paraglider (GS) as a paraglider suspension point (61_{GS}).

7. Electrical propulsion system according to one of the preceding claims, wherein the spacer element (10) is mounted in the first swivel joint (20) at a rear end of the push rods (60) in a substantially free-swinging manner, preferably in a damped free-swinging manner as intended,
wherein the first pivot joint (20) preferably comprises two independent, passive pivot bearings (20) at the respective rear end of the respective push rod (60), which jointly support the spacer element (10) in a free-swinging manner.

8. Electric propulsion system (1) for a paraglider (GS) with a harness (GZ) for carrying a pilot (P), in particular according to one of the preceding claims, wherein the propulsion system (1) comprises a thrust motor (50) pivotable in a pivot joint (30, 30') and having a rotor (52) with preferably two rotor blades (53), an elongate spacer element (10) for spacing the thrust motor (50) in the direction of flight (FR) behind the pilot (P) and a number of thrust rods (60), wherein the second swivel joint (30, 30') has a motor-adjustable swivelling mechanism (30, 30'), wherein the swivelling mechanism (30, 30') is preferably controlled automatically.

9. Electric propulsion system according to claim 8, comprising a actuator (16, 17) for adjusting the swivelling mechanism (30, 30'), wherein the actuator is preferably designed as a spindle motor (17) which drives a spindle (17s), and wherein the swivelling mechanism (30, 30') particularly preferably comprises a link chain (33) which transmits the drive of the spindle into a swivelling movement (SB) of the rotor (52).

10. Electric propulsion system according to one of the preceding claims, having a number of acceleration sensors, gyro instruments, hall sensors, magnetometers and/or inclinometers, in order to achieve, on the basis of the data measured therewith, a, preferably continuous, alignment of a direction of action (WR) of the thrust motor (50) counter to the direction of flight (FR), at least as long as the rotor (52) of the thrust motor (50) is rotating, and/or to achieve an alignment of the rotor (52) with a longitudinal direction (53L) of the rotor blades (53) parallel to the direction of flight (FR) on the basis of the data measured thereby, at least when the rotor (52) is not rotating.

11. Electric propulsion system according to one of the preceding claims, with a drive shaft (51) which couples the thrust motor (50) and the rotor (52), wherein the rotor (52) preferably comprises a plurality of rotor blades (53) rigidly coupled to the drive shaft (51), particularly preferably two rotor blades (53).

12. Electrical propulsion system according to one of the preceding claims, wherein a centre point (55) of the rotor blades (53) of the rotor (52) is spaced apart from the pilot (P) by at least one rotor blade length (54),
and/or wherein at least one rotor blade (53) of the rotor (52) is at least partially covered in a gliding flight phase (III) by means of an aerodynamic fairing (40), preferably at least along the spacer element (10).

13. Paraglider (GS) with an electrical propulsion system (1) according to one of the preceding claims.

14. Method for reaching a gliding flight phase (III) with an electric propulsion system (1) for a paraglider (GS) with a harness (GZ) for carrying a pilot (P), with a thrust motor (50) having a rotor (52), a spacer element (10) for spacing the s thrust motor (50) in a flight direction (FR) behind the pilot (P), a number of thrust rods (60) and at least two swivel joints (20, 30, 30'), comprising at least the following steps:
- Start-up phase (I), in which the weight of the intended propulsion system (1) is carried by the pilot (P),
- Drive phase (II), using the rotor (52) rotating perpendicular to the direction of flight (FR) to achieve propulsion in the direction of flight (FR), in which the shoulder straps (GZ1) of the pilot (P) are relieved by loading the thrust rods (60) with the weight of the propulsion system (1), forming a balance of forces between the pilot (P) hanging from the harness (GZ) and the thrust motor (50) including the spacer element (10),
- Gliding flight phase (III), in which a longitudinal direction (53L) of the rotor blades (53) of the rotor (52) is aligned, preferably swivelled in, essentially parallel to the direction of flight (FR) by means of a swivelling mechanism (30, 30'), at least the rotor (52) of the pusher motor (50) being stationary,
- Optionally at least partially covering the rotor (52) in the gliding flight phase (III) by means of an aerodynamic fairing (40), preferably at least along the spacer element (10),
- Optional landing phase (IV), in which the longitudinal direction (53L) of the rotor blades (53) is orientated transversely to a landing approach direction (FR), in particular horizontally.

15. Use of an electric propulsion system (1) according to one of claims 1 to 12, for reaching a gliding flight phase (III) with a paraglider (GS), in particular taking off from essentially flat terrain.

## Revendications

1. Aide électrique à l'ascension (1) pour un parapente (GS) avec un harnais (GZ) pour porter un pilote (P), l'aide à l'ascension (1) comprenant un moteur de poussée (50) avec un rotor (52), un élément d'écartement (10) pour espacer le moteur de poussée (50) dans une direction de vol (FR) derrière le pilote (P), un certain nombre de tiges de poussée (60) et au moins deux articulations rotatives (20, 30, 30'), les tiges de poussée (60) étant montées pivotantes sur une première extrémité (10v) proche du pilote de l'élément d'écartement (10) au moyen d'une première articulation rotative (20) et le moteur de poussée (50) étant monté pivotant sur une deuxième extrémité (10h) éloignée du pilote de l'élément d'écartement (10) au moyen d'une deuxième articulation rotative (30, 30').

2. Aide électrique à l'ascension selon la revendication 1, avec au moins un moyen de couplage (12), au moyen duquel le pilote (P) porte, dans une phase de démarrage (I), en utilisation conforme, un poids de l'aide à l'ascension (1) par l'intermédiaire du sangle d'épaule (GZ1) du harnais (GZ),
le moyen de couplage (12) étant couplé de préférence de manière amovible aux sangles d'épaule (GZ1) du harnais (GZ).

3. Aide électrique à l'ascension selon la revendication 1 ou 2, l'aide à l'ascension (1) étant conçue de telle sorte que, dans une phase d'entraînement (II), le pilote (P) est accroché, de préférence de manière à pouvoir être réglé, à un point d'accrochage (61_{GZ}) du harnais des tiges de poussée (60) de telle sorte qu'un couple de rotation, qui est appliqué par un poids de l'aide à l'ascension (1) à la première articulation rotative (20), est équilibré.

4. Aide électrique à l'ascension (1) pour un parapente (GS) avec un harnais (GZ) pour porter un pilote (P) selon l'une des revendications précédentes, l'aide à l'ascension (1) comprenant un moteur de poussée pivotant (50) avec un rotor (52) avec au moins une pale de rotor, de préférence deux pales de rotor (53), un élément d'écartement allongé (10) pour espacer le moteur de poussée (50) dans la direction de vol (FR) derrière le pilote (P) et un certain nombre de tiges de poussée (60), l'aide à l'ascension (1) étant conçue de telle sorte que, dans une phase de vol plané (III), au moins le rotor (52) du moteur de poussée (50) est à l'arrêt et une direction longitudinale (53L) des deux pales (53) du rotor (52) est orientée essentiellement parallèle à la direction du vol (FR).

5. Aide électrique à l'ascension selon l'une des revendications précédentes, l'aide à l'ascension (1) étant conçue de telle sorte que, dans le cas d'un parapente porteur (GS), la première articulation pivotante (20) est disposée, en utilisation conforme, plus près du parapente (GS) qu'un point d'accrochage du harnais (61_{GZ}) et/ou un point d'accrochage du parapente (61_{GS}) des tiges de poussée (60).

6. Aide électrique à l'ascension selon l'une des revendications précédentes, dans laquelle au moins un point d'accrochage de parapente (61_{GS}) est disposé dans la direction de vol (FR) derrière un point d'accrochage du harnais (61_{GZ}), en particulier devant le pilote (P), et/ou dans laquelle un point d'accrochage du harnais (61_{GZ}) est disposé au moins aussi près, de préférence plus près, du parapente (GS) qu'un point d'accrochage de parapente (61_{GS}).

7. Aide électrique à l'ascension selon l'une des revendications précédentes, dans laquelle l'élément d'écartement (10) est monté essentiellement en oscillation libre, de préférence en oscillation libre amortie conformément à sa destination, dans la première articulation tournante (20) à une extrémité arrière des tiges de poussée (60), dans lequel la première articulation rotative (20) comprend de préférence deux paliers de rotation passifs indépendants (20) à l'extrémité arrière respective de la tige de poussée respective (60), qui supportent ensemble l'élément d'écartement (10) en oscillation libre.

8. Aide électrique à l'ascension (1) pour un parapente (GS) avec un harnais (GZ) pour porter un pilote (P), en particulier selon l'une des revendications précédentes, l'aide à l'ascension (1) comprenant un moteur de poussée (50) pouvant pivoter dans une articulation rotative (30, 30') avec un rotor (52) avec de préférence deux pales de rotor (53), un élément d'écartement allongé (10) pour espacer le moteur de poussée (50) dans la direction de vol (FR) derrière le pilote (P) et un certain nombre de tiges de poussée (60), la deuxième articulation rotative (30, 30') présentant un mécanisme de pivotement (30, 30') réglable par moteur, le mécanisme de pivotement (30, 30') étant de préférence commandé automatiquement.

9. Aide électrique à l'ascension selon la revendication 8, comprenant un servomoteur (16, 17) pour le réglage du mécanisme de pivotement (30, 30'), le servomoteur étant de préférence conçu comme un moteur à broche (17) qui entraîne une broche (17s), et le mécanisme de pivotement (30, 30') comprenant de manière particulièrement préférée une chaîne à maillons (33) qui transforme l'entraînement de la broche en un mouvement de pivotement (SB) du rotor (52).

10. Aide électrique à l'ascension selon l'une des revendications précédentes, avec un certain nombre de capteurs d'accélération, d'instruments gyroscopiques, de capteurs à effet Hall, de magnétomètres et/ou d'inclinomètres, afin d'obtenir, sur la base des données ainsi mesurées, une orientation, de préférence continue, d'une direction d'action (WR) du moteur de poussée (50) dans le sens opposé à la direction de vol (FR), au moins tant que le rotor (52) du moteur de poussée (50) tourne, et/ou pour obtenir, sur la base des données ainsi mesurées, un alignement du rotor (52) avec une direction longitudinale (53L) des pales de rotor (53) parallèle à la direction de vol (FR), au moins lorsque le rotor (52) ne tourne pas.

11. Aide électrique à l'ascension selon l'une des revendications précédentes, avec un arbre d'entraînement (51) qui couple le moteur de poussée (50) et le rotor (52), le rotor (52) comprenant de préférence une pluralité de pales de rotor (53) couplées rigidement à l'arbre d'entraînement (51), de préférence deux pales de rotor (53).

12. Aide électrique à l'ascension selon l'une des revendications précédentes, dans laquelle un centre (55) des pales (53) du rotor (52) est espacé du pilote (P) d'au moins une longueur de pale (54), et/ou dans lequel au moins une pale (53) du rotor (52) est au moins partiellement recouverte dans une phase de vol plané (III) au moyen d'un carénage aérodynamique (40), de préférence au moins le long de l'élément d'écartement (10).

13. Parapente (GS) avec un dispositif d'ascension électrique (1) selon l'une des revendications précédentes.

14. Procédé pour atteindre une phase de vol plané (III) avec une aide électrique à l'ascension (1) pour un parapente (GS) avec un harnais (GZ) pour porter un pilote (P), avec un moteur de poussée (50) présentant un rotor (52), un élément d'écartement (10) pour espacer le moteur de poussée (50) dans une direction de vol (FR) derrière le pilote (P), un nombre de tiges de poussée (60) et au moins deux articulations rotatives (20, 30, 30'), comprenant au moins les étapes suivantes:
- phase de démarrage (I), pendant laquelle un poids de l'aide à l'ascension (1) disposée de manière conforme est porté par le pilote (P),
- phase de de propulsion (II), en utilisant le rotor (52) tournant perpendiculairement à la direction de vol (FR) pour obtenir une propulsion dans la direction de vol (FR), dans laquelle les sangles d'épaule (GZ1) du pilote (P) sont déchargées par la charge des barres de poussée (60) avec le poids de l'aide à l'ascension (1) en formant un équilibre des forces entre le pilote (P) suspendu au harnais (GZ) et le moteur de poussée (50), y compris l'élément d'écartement (10),
- phase de vol plané (III) au cours de laquelle, au moyen d'un mécanisme de pivotement (30, 30'), une direction longitudinale (53L) des pales (53) du rotor (52) est orientée, de préférence pivotée, sensiblement parallèlement à la direction de vol (FR), au moins le rotor (52) du moteur de poussée (50) étant à l'arrêt,
- en option, masquer au moins partiellement le rotor (52) dans la phase de vol plané (III) au moyen d'un carénage aérodynamique (40), de préférence au moins le long de l'élément d'écartement (10),
- en option, une phase d'atterrissage (IV) dans laquelle la direction longitudinale (53L) des pales de rotor (53) est orientée transversalement à une direction d'approche d'atterrissage (FR), en particulier horizontalement.

15. Utilisation d'une aide électrique à la montée (1) selon l'une des revendications 1 à 12, pour atteindre une phase de vol plané (III) avec un parapente (GS), notamment en décollant d'un terrain essentiellement plat.
